# EUROPÄISCHE PATENTSCHRIFT

(11) **EP 1 985 813 B1**
(45) Veröffentlichungstag und Bekanntmachung des Hinweises auf die Patenterteilung: **31.07.2013**
(21) Anmeldenummer: 08154933.9
(22) Anmeldetag: 22.04.2008
(51) Int. Cl.: F01L 1/34, B60T 13/52

(54) **Nockenwellenphasensteller und Vakuumpumpe für eine Brennkraftmaschine**
Cam shaft phaser and vacuum pump for a combustion engine
Déphaseur d'arbres à cames et pompe à vide pour un moteur à combustion interne

(30) Priorität: 27.04.2007 DE 102007020431
(43) Veröffentlichungstag der Anmeldung: 29.10.2008
(60) Teilanmeldung: 10163641.3
(73) Patentinhaber: Schwäbische Hüttenwerke Automotive GmbH, 73433 Aalen-Wasseralfingen (DE)
(72) Erfinder: Bohner, Jürgen, 88339, Bad Waldsee (DE); Welte, Claus, 88326, Aulendorf (DE); Maucher, Franz, 88339, Bad Waldsee (DE)
(74) Vertreter: Schwabe - Sandmair - Marx

(56) Entgegenhaltungen:
- EP-A- 0 109 274
- EP-A- 0 758 047
- EP-A- 1 191 211
- EP-A- 1 703 088
- DE-A1- 4 210 742
- DE-A1- 10 228 354
- DE-A1- 10 260 546
- DE-A1- 10 346 448
- DE-A1- 19 745 670
- DE-A1- 19 952 275
- FR-A- 2 885 174
- US-A- 5 327 859
- US-A1- 2005 028 773

## Beschreibung

Die Erfindung betrifft eine Vorrichtung mit einem Nockenwellenphasensteller und einer Vakuumpumpe für eine Montage an einer Brennkraftmaschine und auch eine Brennkraftmaschine mit der montierten Vorrichtung.

Zur Verringerung von Bremspedalkräften bei Kraftfahrzeugen, insbesondere Personenkraftfahrzeugen und leichten Nutzfahrzeugen, werden die Fahrzeuge mit pneumatischen Bremskraftverstärkern ausgerüstet. Bei konventionellen Pkw-Ottomotoren werden die für Bremskraftverstärker erforderlichen Unterdrücke durch die hinter der Ansaugsystem-Drosselklappe wirkenden Saugrohrunterdrücke aufgebracht. Wegen der von konventionellen Ottomotoren abweichenden Laststeuerung reichen bei Dieselmotoren und auch modernen Ottomotoren mit Kraftstoffdirekteinspritzung die im Betrieb auftretenden Saugrohrunterdrücke für die Versorgung der Bremskraftverstärker in vielen Fällen nicht aus. Bei derartigen Brennkraftmaschinen kommt daher eine vom jeweiligen Motor angetriebene, separate Vakuumpumpe zum Einsatz. Diese Pumpen werden im Allgemeinen von einer Nockenwelle des Motors angetrieben und sind in der Regel an einer Stirnseite des Zylinderkopfs angeflanscht.

Zur Erhöhung von Leistung und Drehmoment sowie zur Reduzierung der Schadstoffemissionen und Kraftstoffverbräuche werden moderne Pkw-Motoren in zunehmendem Maße mit Nockenwellenphasenstellern ausgerüstet, die mit Motoröldruck beaufschlagt werden und mit denen sich der Phasenwinkel einer Einlassnockenwelle oder einer Auslassnockenwelle oder beider Nockenwellen relativ zu einer Motorkurbelwelle verstellen lassen. Üblich ist die Anordnung separater Funktionseinheiten von Nockenwellenphasenstellern und Vakuumpumpen an der Nockenwelle. Derartige Anordnungen bringen wegen der erforderlichen Dichtheit und Kopplung der Funktionseinheiten mit dem jeweiligen Antrieb, gegebenenfalls auch zueinander, und auch im Hinblick auf die Gestaltung der Ölzu- und -abführung einen verhältnismäßig großen Bauaufwand mit sich. Eine direkte Kopplung der Vakuumpumpe mit einer Nockenwelle beschränkt ferner das Drehzahlniveau und die Anordnung der Vakuumpumpe.

Die DE 102 60 546 A1 offenbart die Anordnung einer Vakuumpumpe und eines Nockenwellenphasenstellers koaxial nebeneinander auf der gleichen Drehachse. Ein Rotor des Phasenstellers sitzt verdrehgesichert auf der zu verstellenden Nockenwelle. Der Stator wird von der Kurbelwelle angetrieben. Der Rotor ist verdrehgesichert über eine Kupplung mit der Vakuumpumpe verbunden. Die Vakuumpumpe weist ein Gehäuse auf, das an einem Zylinderkopf der Brennkraftmaschine angeflanscht ist, und eine Antriebswelle, die den Zylinderkopf durchragt und mittels der Kupplung verdrehgesichert mit dem Rotor des Phasenstellers verbunden ist. Die Vakuumpumpe wird durch eine Zentralbohrung ihrer Antriebswelle durch den Zylinderkopf hindurch mit Schmieröl versorgt.

Die EP 1 191 211 A2 betrifft eine fremdgezündete Brennkraftmaschine mit wenigstens einem Zylinderkopf mit einer ersten und einer zweiten Nockenwelle zur Betätigung von im Zylinderkopf angeordneten Einlass- und Auslassventilen, wobei die beiden Nockenwellen synchron über einen einzigen Phasenversteller phasenverstellbar sind. Der Phasenversteller ist im Antriebsstrang zwischen der Kurbelwelle und einer der Nockenwelle angeordnet.

Die EP 0 109 273 beschreibt eine Brennkraftmaschine mit einem Zylinderkopf, einer Nockenwelle und einer in dem Zylinderkopf integrierten Vakuumpumpe.

Die US 5 327 859 A betrifft eine Brennkraftmaschine mit einem Phasenversteller zum Verstellen einer Nockenwelle mittels einer Kontrollwelle, deren Lage zur Nockenwelle über eine nicht näher beschriebene Vorrichtung verstellt werden kann.

Die DE 102 28 354 A1 beschreibt eine Vorrichtung zur Druckversorgung einer Nockenwellen-Verstelleinrichtung mit einem Druckspeicher zur Aufnahme eines Druckmediums und einer Druckerzeugungseinrichtung zum Aufbringen von Druck auf das Druckmedium, um dieses zu der Nockenwellen-Verstelleinrichtung zu fördern. Druckspeicher und Drucker-zeugungsvorrichtung sind innerhalb der Nockenwelle angeordnet.

Die EP 0 758 047 A1 betrifft eine hydraulisch gesteuerte oder geregelte Nockenwellen-Verstelleinrichtung für eine Brennkraftmaschine. Die Verstelleinrichtung weist einen Druckspeicher auf, der aus einem Hydraulikkreislauf aufgeladen und über ein Startsignal mit dem Hydraulikkreislauf ventilgesteuert verbunden werden kann, um eine möglichst frühe Verstellung der Nockenwelle bei einem Start der Brennkraftmaschine zu ermöglichen.

Die D 42 10 742 A1 beschreibt eine hydraulische Steuereinrichtung zur Verstellung einer Nockenwelle mit einem Druckbehälter. Ein Elektromagnetventil wird vom Motormanagement gesteuert und öffnet und schließt den Zufluss aus dem Druckbehälter zu der Verstelleinrichtung.

Aus der DE 103 46 448 A1 ist ein Nockenwellenversteller für eine Brennkraftmaschine bekannt, mit einem in die Nockenwelle eingefügten hydraulischen Steuerventil, mit dem eine Stelleinheit zur Winkelverstellung der Nockenwelle steuerbar ist. Um hohe Stellgeschwindigkeiten zur Veränderung der Phasenlage der Nockenwelle zu ermöglichen, ist in der Nockenwelle ein Ölführungsmodul eingefügt, welches zumindest zur Führung des Hydraulikmediums zwischen der Nockenwelle und dem Steuerventil dient.

Die DE 197 45 670 A1 betrifft eine Vorrichtung zum Verändern der Steuerzeiten von Gaswechselventilen einer Brennkraftmaschine mit einem hydraulischen Stellelement, das mittels eines elektromagnetischen Steuerventils betätigt werden kann, um die Nockenwelle zwischen zwei Endstellungen zu verdrehen und zu fixieren.

Die US 2005/0028773 betrifft einen Phasenversteller für eine Nockenwelle eines Brennstoffmotors.

Es ist eine Aufgabe der Erfindung, einen Nockenwellenphasensteller und eine Vakuumpumpe für eine Brennkraftmaschine raum- und gewichtssparend und einfach montierbar anzuordnen.

Die Erfindung geht von einer Vorrichtung aus, die einen Phasensteller für eine Verstellung der Phasenlage einer Nockenwelle einer Brennkraftmaschine relativ zu einer Kurbelwelle und eine Vakuumpumpe für die Versorgung eines Aggregats mit einem Unterdruck umfasst. Der Phasensteller kann für die Verstellung der Phasenlage einer weiteren Nockenwelle oder gegebenenfalls mehrerer weiterer Nockenwellen der Brennkraftmaschine vorgesehen sein. Die Vorrichtung kann auch einen weiteren oder mehrere weitere Phasensteller für die Verstellung der Phasenlage einer weiteren Nockenwelle oder der Phasenlage mehrerer weiterer Nockenwellen umfassen. Die Vakuumpumpe kann der Versorgung mehrerer Aggregate dienen, oder die Vorrichtung kann eine oder mehrere weitere Vakuumpumpen für die Versorgung des Aggregats oder eines weiteren Aggregats oder mehrerer weiterer Aggregate umfassen.

Die Vorrichtung umfasst ferner ein Anbaugehäuse für die Vakuumpumpe. Das Anbaugehäuse ist an der Brennkraftmaschine montierbar oder bereits montiert, d.h. die Erfindung hat die Vorrichtung als solche und im montierten Zustand zum Gegenstand. Das Anbaugehäuse lagert ein Förderglied der Vakuumpumpe beweglich und bildet vorzugsweise eine Förderkammer, in der das Förderglied aufgenommen ist. Vorzugsweise weist es einen Einlass und einen Auslass. Gegebenenfalls bildet das Anbaugehäuse auch nur einen Einlass oder stattdessen nur einen Auslass für das mittels der Vakuumpumpe zu fördernde Fluid, vorzugsweise Luft, auf. Das Anbaugehäuse kann einteilig oder mehrteilig sein. In bevorzugt mehrteiligen Ausführungen kann es beispielsweise ein Anbaugehäusehauptteil und einen oder mehrere Gehäusedeckel aufweisen.

Nach der Erfindung bildet das Anbaugehäuse auch für den Phasensteller ein Gehäuse oder zumindest einen Gehäusedeckel und erfüllt für den Phasensteller wenigstens eine Gehäusefunktion. So kann das Anbaugehäuse insbesondere wenigstens eine Komponente des Phasenstellers oder eines Antriebs für den Phasensteller lagern. Erfindungsgemäß erstrecken sich eine oder mehrere Leitungen für ein Druckfluid, optional für elektrische Energie oder für Signale, im Anbaugehäuse oder außen an dem Anbaugehäuse. Das Anbaugehäuse kann einen Aufnahmeraum für ein Steuermittel, beispielsweise ein Steuerventil oder ein elektrisches Steuermittel, gegebenenfalls auch einen elektromotorischen Aktuator für den Phasensteller aufweisen.

Phasensteller und Vakuumpumpe werden mittels des Anbaugehäuses zu einer Funktionseinheit vereint. In dem Maße, in dem das Anbaugehäuse der Vakuumpumpe Funktionen für den Phasensteller übernimmt, wird die Brennkraftmaschine als solche von den betreffenden Funktionen elatlastet. Beispielsweise kann ein für die Vakuumpumpe erforderliches Strukturteil des Anbaugehäuses gleichzeitig auch ein Strukturteil für den Phasensteller bilden. Dies trägt zur Reduzierung des Gewichts und Bauraumbedarfs von Phasensteller und Vakuumpumpe, ferner zur Reduzierung der Zahl der im Zusammenhang mit dem Phasensteller und der Vakuumpumpe zu montierenden Teile bei. Desweiteren wird die Schnittstelle zwischen Brennkraftmaschine einerseits und Phasensteller und Vakuumpumpe andererseits vereinfacht. Die Zahl der Schnittstellen kann reduziert werden, indem beispielsweise die Vakuumpumpe über den Phasensteller angetrieben wird und deshalb nicht zusätzlich an einen Antrieb angeschlossen werden muss.

Der Phasensteller weist in bevorzugten Ausführungen einen ersten Rotor und einen weiteren, zweiten Rotor auf. Der erste Rotor wird im Betrieb der Brennkraftmaschine mit einer von der Drehzahl einer Kurbelwelle der Brennkraftmaschine abhängigen Drehzahl angetrieben. Der zweite Rotor treibt die bezüglich der Phasenlage einzustellende Nockenwelle an. Der zweite Rotor wird in Abhängigkeit vom ersten Rotor angetrieben. Die Drehwinkelposition, die der zweite Rotor während der Drehbewegung relativ zum ersten Rotor einnimmt, d.h. die Phasenlage, ist über einen bestimmten Drehwinkelverstellbereich verstellbar. Der zweite Rotor wird vorzugsweise über den ersten Rotor angetrieben. Der erste Rotor nimmt den zweiten Rotor in bevorzugter Ausführung bei seiner Drehbewegung mit und ist hierfür entsprechend mit dem zweiten Rotor gekoppelt. Die Kopplung ist derart, dass der durch die Mitnahme erzeugten Drehbewegung die relative Verstelldrehbewegung überlagerbar ist. Die Kopplung ist vorzugsweise eine fluidisch-mechanische. Grundsätzlich könnte die Phasenlage des zweiten Rotors jedoch auch elektromagnetisch verstellt und die Verstellung der Phasenlage elektronisch gesteuert werden. Auf eine mechanische Kopplung könnte in derartigen Ausführungen gänzlich verzichtet werden. Die Rotoren können insbesondere zueinander innenachsig und vorzugsweise um die gleiche Drehachse drehbar angeordnet sein. Eine außenachsige Anordnung mit vorzugsweise parallelen Drehachsen ist jedoch ebenfalls denkbar. Grundsätzlich könnte der Phasensteller auch als eigenständiger Motor, beispielsweise Elektromotor, gebildet sein und der erste Rotor durch einen relativ zum Anbaugehäuse nicht drehbaren Stator ersetzt werden. Der zweite Rotor würde in derartigen Ausführungen relativ zu dem Stator mit der von der Drehzahl der Kurbelwelle abhängigen Drehzahl angetrieben und die Drehverstellbewegung würde dieser Grunddrehzahl zwecks Einstellung der Phasenlage überlagert werden.

In bevorzugten Ausführungen lagert das Anbaugehäuse wenigstens einen der Rotoren, vorzugsweise beide Rotoren, drehbar. Es kann den ersten oder den zweiten Rotor direkt drehbar lagern, indem es mit dem betreffenden Rotor oder einem drehsteif mit dem Rotor verbundenen Lagerelement ein Drehgelenk bildet. Alternativ kann der erste oder der zweite Rotor auch indirekt erst über ein Zwischenglied drehbar am Anbaugehäuse abgestützt sein, wobei der betreffende Rotor mit dem Zwischenglied ein Drehgelenk und das Zwischenglied mit dem Anbaugehäuse ein weiteres Drehgelenk bilden. Der erste oder der zweite Rotor kann oder können auch über mehrere Zwischenglieder und entsprechend mehrere Gelenke drehbar vom Anbaugehäuse gelagert werden. Insbesondere kann einer der Rotoren für den anderen das wenigstens einen Zwischenglied bilden

Das Wort "oder" wird hier und auch sonst stets im Sinne von "und/oder" gebraucht, umfasst also jeweils die Bedeutung von "entweder .... oder" und auch die Bedeutung von "sowohl als auch", sofern sich aus dem jeweiligen Zusammenhang nicht zwangsläufig nur ein entweder in die eine oder die andere Richtung eingeschränkter Bedeutungsinhalt ergeben kann.

Was das Merkmal der Drehlagerung anbetrifft, kann zusammengefasst entweder nur der erste Rotor oder nur der zweite Rotor oder sowohl der erste Rotor als auch der zweite Rotor vom Anbaugehäuse direkt oder indirekt drehbar gelagert werden, was auch den Fall einschließt, dass einer der Rotoren direkt und der andere indirekt über ein weiteres Drehgelenk am Anbaugehäuse abgestützt ist. Als direkte Drehlagerung werden Ausführungen verstanden, in denen eine der Drehlagerung dienende Nabe vom jeweiligen Rotor in einem Stück gebildet wird und auch Ausführungen, in denen der jeweilige Rotor einerseits und eine das Drehgelenk mit dem Anbaugehäuse bildende Welle andererseits separat voneinander geformt und verdrehgesichert miteinander gefügt sind. Falls der Phasensteller fluidisch verstellbar ist, kann der zweite Rotor vorteilhafterweise auf einer separat gefertigten Fluidverteilerwelle verdrehgesichert befestigt sein, die mit dem Anbaugehäuse das einzige Drehgelenk für den zweiten Rotor bildet oder über ein oder mehrere weitere Drehgelenke am Anbaugehäuse drehbar abgestützt ist.

Weist die Brennkraftmaschine wenigstens zwei Nockenwellen auf, entspricht es bevorzugten Ausführungen, wenn einer der Rotoren mit einer der Nockenwellen verdrehgesichert verbindbar ist. Der andere Rotor kann mit der anderen Nockenwelle oder einer der anderen Nockenwellen ebenfalls verdrehgesichert verbindbar sein. Bevorzugter ist jedoch nur einer der Rotoren mit einer der Nockenwellen verdrehgesichert verbindbar, während der andere Rotor mit der anderen Nockenwelle oder einer der anderen Nockenwellen mittels Getriebeglieder gekoppelt wird. In einer ersten Variante ist der erste Rotor mit einer der Nockenwellen verdrehgesichert verbindbar, und der zweite Rotor treibt auf die andere Nockenwelle oder eine der gegebenenfalls mehreren anderen Nockenwellen ab, nämlich auf die bezüglich der Phasenlage zu verstellenden Nockenwelle. In einer zweiten Variante ist der zweite Rotor verdrehgesichert mit der zu verstellenden Nockenwelle verbunden und der erste Rotor im Drehwinkelbereich der Verstellbarkeit relativ zu dieser Nockenwelle drehbar. Derartige Ausführungen sind insbesondere dann von Vorteil, wenn die Vorrichtung einen weiteren Phasensteller zur Verstellung der Phasenlage der zweiten Nockenwelle oder einer von mehreren weiteren Nockenwellen umfasst. Bei dem weiteren Phasensteller können hinsichtlich der Verbindung mit der weiteren Nockenwelle vorteilhafterweise die gleichen Verhältnisse wie bei dem ersten Phasensteller herrschen. Der weitere Phasensteller weist vorteilhafterweise eines oder mehrere der zum ersten Phasensteller offenbarten Merkmale auf. Er kann insbesondere gemeinsam mit diesem in oder an dem Anbaugehäuse angeordnet sein.

Von Vorteil ist, wenn das Anbaugehäuse den ersten oder den zweiten Rotor direkt oder über wenigstens ein Zwischenglied in einer Position und Ausrichtung lagert, in der dieser Rotor bei Montage des Anbaugehäuses verdrehgesichert an oder auf der Nockenwelle montierbar ist. Für die Montage dieses Rotors und vorzugsweise des gesamten Phasenstellers genügt es in derartigen Ausführungen, das Anbaugehäuse zu greifen und einschließlich des betreffenden Rotors oder vorzugsweise gesamten Phasenstellers an der Brennkraftmaschine zu positionieren und zu montieren.

Der erste oder zweite Rotor ist mit der Nockenwelle vorzugsweise mittels Form- oder Reibschlussverbindung verbindbar, besonders bevorzugt mittels einer Pressverbindung. Für die Pressverbindung ist es günstig, wenn der Rotor oder ein mit dem Rotor verdrehgesichert verbundenes Montageteil eine relativ zur Drehachse der Nockenwelle geneigte Schrägfläche und die Nockenwelle eine entsprechende Gegenfläche aufweisen, die im verbundenen Zustand mit Presssitz gegeneinander gepresst sind. Die Schrägflächen der Nockenwelle und des Rotors oder Montageteils können insbesondere als Außen- und Innenkonus gebildet sein und mittels einer längs der Drehachse der Nockenwelle eingeleiteten Kraft gegeneinander gepresst werden.

Obgleich in bevorzugten Ausführungen wenigstens, vorzugsweise genau, einer der Rotoren mit der gegebenenfalls nur einen einzigen Nockenwelle oder einer von mehreren Nockenwellen der Brennkraftmaschine verdrehgesichert verbunden ist, ist auch denkbar, dass keiner der Rotoren verdrehgesichert mit der gegebenenfalls einen einzigen oder einer der mehreren Nockenwellen verdrehgesichert verbindbar ist. So sind durchaus Ausführungen möglich, in denen der erste Rotor nicht über die Nockenwelle oder der bevorzugt mehreren Nockenwellen drehangetrieben wird, sondern über Getriebeglieder direkt von der Kurbelwelle und auch der zweite Rotor über Getriebeglieder auf die zu verstellende Nockenwelle abtreibt. Desweiteren kann bei mehreren Nockenwellen der erste Rotor auch von einer der Nockenwellen über Getriebeglieder angetrieben werden und der zweite Rotor über Getriebeglieder auf die zu verstellende Nockenwelle abtreiben.

Das Anbaugehäuse kann mit Vorteil der Drehlagerung eines Getrieberads, der Aufnahme solch eines Getrieberads oder der Aufnahme oder Abstützung eines anderen Getriebeglieds, beispielsweise eines Zahnriemens, eines einfachen Riemens oder einer Kette dienen. Bei dem drehbar gelagerten oder anderweitig abgestützten oder aufgenommenen Getriebeglied kann es sich insbesondere um ein Abtriebsrad auf die Vakuumpumpe oder gegebenenfalls ein Abtriebsrad von der Vakuumpumpe auf den Phasensteller, ein Abtriebsrad auf eine weitere Nockenwelle der Brennkraftmaschine oder ein Antriebsrad für den Drehantrieb des ersten Rotors handeln. Es kann auch die weitere Nockenwelle angetrieben und von dieser auf den ersten Rotor des Phasenstellers abgetrieben weiden. Je mehr der für den Antrieb auf oder den Abtrieb vom Phasensteller erforderlichen Getriebeglieder von dem Anbaugehäuse drehbar gelagert oder anders abgestützt oder aufgenommen werden, d.h. am oder im Anbaugehäuse montiert sind, desto einfacher gestaltet sich die Integration von Phasensteller und Vakuumpumpe an der Brennkraftmaschine.

In bevorzugten Ausführungen wird die Vakuumpumpe über den Phasensteller, d.h. vom Phasensteller her angetrieben. Falls die Vakuumpumpe wie bevorzugt eine Rotationspumpe mit wenigstens einem drehbaren Förderglied ist, kann einer der Rotoren verdrehgesichert mit dem Förderglied verbunden sein. Anstatt einer diehsteifen Verbindung kann bei einer koaxialen Anordnung nebeneinander auf der gleichen Drehachse einer der Rotoren des Phasenstellers über ein Getriebe mechanisch mit dem Förderglied der Pumpe gekoppelt sein, beispielsweise mittels eines Umlaufgetriebes. Bevorzugt werden außenachsige Getriebe. Bei Kopplung mittels eines außenachsigen Getriebes unterscheiden sich die Drehachsen des Phasenstellers und der bevorzugt als Rotationspumpe gebildeten Vakuumpumpe. Zweckmäßigerweise sind die Drehachsen in diesem Falle zueinander parallel. Bevorzugte Getriebe sind außenachsige Stirnradgetriebe. Grundsätzlich kann das Getriebe jedoch auch innenachsig oder mittels eines Zugmittels wie beispielsweise eines Zahnriemens gebildet sein. Mittels eines Getriebes kann die Drehzahl des Rotor oder Stators vorteilhafterweise in eine höhere Drehzahl des Förderglieds übersetzt werden. Durch eine Übersetzung der Drehzahl des auf die Pumpe abtreibenden Rotors ins Schnelle kann die Pumpe bei gleicher Förderleistung mit einem kleineren Volumen und dementsprechend geringerem Bauraumbedarf realisiert werden. Durch eine Untersetzung der Drehzahl ins Langsame können die Reibleistung und in der Folge der Verschleiß verringert werden.

Der Phasensteller ist fluidisch verstellbar bzw. betätigbar. Er kann insbesondere als fluidischer Schwenkmotor gebildet sein. Beispiele für Schwenkmotoren werden in der US 2,861,557 und der US 4,858,572 beschrieben.

Im Falle eines fluidischen Phasenstellers kann für das Druckfluid, mittels dem die Phasenlage des Rotors relativ zum Stator verstellt wird, ein Druckspeicher vorgesehen sein, um eine ausreichende Stellgeschwindigkeit des Phasenstellers zu gewährleisten. Wird der Phasensteller in Abhängigkeit von einer Drehzahl der Brennkraftmaschine mit Druckfluid versorgt, vorzugsweise mittels einer von der Brennkraftmaschine angetriebenen Pumpe, beispielsweise einer Schmiermittelpumpe zur Versorgung der Brennkraftmaschine mit Schmiermittel, kann der Druck solch einer Druckfluidversorgung innerhalb des Betriebsbereichs der Brennkraftmaschine größeren Schwankungen unterliegen. Der Druckspeicher sorgt dafür, dass der Phasensteller auch unter ungünstigen Bedingungen mit einem ausreichenden Druck und mit einer ausreichenden Menge des Druckfluids versorgt wird. Vorteilhafterweise nimmt das Anbaugehäuse den Druckspeicher, gegebenenfalls nur einen Teil des Druckspeichers oder auch nur eine oder mehrere bewegliche Komponente(n) des Druckspeichers, die der Bereitstellung des Drucks dienen, auf. Der Druckspeicher kann auch in einem eigenen Gehäuse angeordnet sein, das an einem Gehäuseteil des Anbaugehäuses montiert ist. In derartigen Ausführungen werden das Anbaugehäuseteil und das montierte Druckspeichergehäuse zusammen als Anbaugehäuse oder Teil des Anbaugehäuses verstanden. In bevorzugten Ausführungen bildet das Anbaugehäuse jedoch in einem Stück sowohl ein oder mehrere Montagestellen für die Montage an der Brennkraftmaschine als auch zumindest eine Wandung des Druckspeichers.

Der Druckspeicher weist eine Druckkammer und eine die Druckkammer begrenzende Wandstruktur auf, die gegen eine rückstellende Elastizitätskraft beweglich ist. Die bewegliche Wandstruktur kann eine elastisch flexible, aber fluiddichte Wandstruktur oder vorzugsweise ein in der Druckkammer hin und her beweglicher Kolben sein, Im ersten Fall kann die Wandstruktur an der Kammerwand befestigt sein. Sie kann selbst ein Federglied bilden, das die rückstellende Elastizitätskraft erzeugt. Der Druckspeicher wäre ein Membranspeicher mit einer elastischen oder gegebenenfalls nur flexiblen Membran, die von einem zusätzlichen Federglied gespannt wird. Im anderen Fall stützt sich der Kolben an einem Federglied ab. Das Federglied für den Kolben oder die nur flexible Wandstruktur kann von einer Gasdruckkammer gebildet werden, ist vorzugsweise jedoch eine mechanische Feder, beispielsweise eine Spiralfeder, die bei einer Erhöhung des Drucks in der Kammer gespannt wird, vorzugsweise auf Druck. Das Anbaugehäuse lagert vorzugsweise den Kolben oder stützt das Federglied ab, in dem einen Fall die in sich elastische Wandstruktur und im anderen Fall die Gasdruck- oder Mechanikfeder.

Ein Druckspeicher für den Phasensteller ist grundsätzlich vorteilhaft und nicht nur für die Kombination von Phasensteller und Vakuumpumpe oder nur in Verbindung mit dem Merkmal der Integration eines Phasenstellers und einer Vakuumpumpe in oder an einem gemeinsamen Anbaugehäuse. Die Kombination eines Phasenstellers für eine oder an einer Brennkraftmaschine und eines Druckspeichers für das der Verstellung des Phasenstellers dienende Druckfluid ist daher auch bereits als solche ein Gegenstand der Erfindung. Eine derartige Vorrichtung zur Verstellung der Phasenlage einer Nockenwelle relativ zu einer Kurbelwelle einer Brennkraftmaschine umfasst einen Phasensteller für die Verstellung der Phasenlage der Nockenwelle und einen Druckspeicher zur Sicherstellung eines ausreichenden Fluiddrucks für den Phasensteller. Ferner dient der Druckspeicher als Polster oder Reservoir, indem er die für die Verstellung verfügbare Fluidmenge vergrößert. Der Phasensteller und der Druckspeicher weisen vorteilhafterweise eines oder mehrere der hier offenbarten Merkmale auf und können insbesondere einem oder mehreren der Ansprüche entsprechen. Eine derartige Vorrichtung kann eines oder mehrere der hier im Zusammenhang mit der Vakuumpumpe offenbarten Merkmale aufweisen. Ferner kann insbesondere ein Anbaugehäuse der beschriebenen Art den Druckspeicher oder wenigstens eine Wandung des Druckspeichers bilden.

Der Druckspeicher ist vorzugsweise nur dem Phasensteller zugeordnet. Falls die Vorrichtung mehrere Phasensteller aufweist, kann für jeden dieser Phasensteller jeweils ein eigener Druckspeicher oder für die mehreren Phasensteller ein gemeinsamer Druckspeicher vorgesehen sein.

Das Anbaugehäuse umfasst in bevorzugten Ausführungen ein Anbaugchäuseteil und einen oder mehrere an dem Anbaugehäuseteil befestigte(n) Deckel. Das Anbaugehäuseteil erfüllt eine oder mehrere der für den Betrieb des Phasenstellers und der Pumpe erforderlichen Funktionen, beispielsweise der Lagerung und Fluidverteilung, Das Anbaugehäuseteil ist in einem Stück gefertigt, d.h. in einem Verfahren der Urformung geformt und vorzugsweise materialabtragend nachbearbeitet. Das Anbaugehäuse kann mehrere derartige Gehäuseteile umfassen, die jeweils wenigstens eine der für den Betrieb der Vorrichtung erforderlichen Funktionen wie beispielsweise des Lagerns oder Fluidverteilens erfüllt. In bevorzugten Ausführungen besteht das Anbaugehäuse aus einem einzigen Anbaugehäuseteil zur Erfüllung einer oder mehrerer für den Betrieb der Vorrichtung erforderlichen Funktionen und darüber hinaus lediglich noch aus einem oder mehreren Gehäusedeckel(n) für einen schmutz- oder vorzugsweise fluiddichten Abschluss des Anbaugehäuseteils oder einer oder mehrerer interner oder externer Kammer(n) des Anbaugehäuseteils.

Anstatt der genannten Funktionen des Abstützens, Drehlagerns oder Aufnehmens von Komponenten oder der Bildung oder des Abstützens von Komponenten des Druckspeichers kann das Anbaugehäuse ein oder mehrere andere Funktionen, beispielsweise die Verteilung von Schmieröl für die Pumpe oder eines nicht hydraulischen Phasenstellers oder die Verteilung des Druckfluids für einen fluidischen Phasensteller übernehmen. Bevorzugter erfüllt das Anbaugehäuse jedoch wenigstens eine der bereits beschriebenen Funktionen und wenigstens eine dieser anderen Funktionen.

Die Pumpe wird vorzugsweise mit dem Schmieröl für die Brennkraftmaschine geschmiert. Hinsichtlich der Schmierölversorgung ist noch zu bemerken, dass der Phasensteller in fluidischen Ausführungen vorzugsweise mit dem Schmieröl der Brennkraftmaschine als Druckfluid betrieben und das gleiche Schmieröl auch zur Schmierung der Vakuumpumpe verwendet wird.

Wird der Phasensteller mit dem Schmieröl für die Brennkraftmaschine betrieben, kann das Schmieröl von der Nockenwelle zum Phasensteller und dem bevorzugt vorhandenen Druckspeicher geführt werden. Alternativ oder zusätzlich wird das Schmieröl in bevorzugten Ausführungen gesondert herangeführt, vorzugsweise in oder an dem Maschinengehäuse der Brennkraftmaschine. In vorteilhaften Ausführungen weist das Anbaugehäuse für das Schmieröl einen Fluidanschluss auf für einen Anschluss an die betreffende Schmierölzuführung in oder an dem Maschinengehäuse der Brennkraftmaschine. Wird der Phasensteller nicht mit dem Schmieröl der Brennkraftmaschine betrieben oder die Vakuumpumpe nicht mit dem Schmieröl geschmiert, kann das Anbaugehäuse mit Vorteil dennoch einen Fluidanschluss für die Heranführung eines anderen Druckfluids oder Schmiermittels aufweisen.

In bevorzugten Ausführungen wird der Phasensteller über ein Rückschlagventil mit dem Druckfluid versorgt. Wird die Vakuumpumpe mit dem Druckfluid geschmiert, werden beide Komponenten vorteilhafterweise über das gleiche Rückschlagventil mit Druckfluid bzw. Schmieröl versorgt. Es kann alternativ aber auch für jede dieser beiden Komponenten jeweils ein eigenes Rückschlagventil vorgesehen sein. Anstatt eines einfachen Rückschlagventils oder gegebenenfalls mehrerer Rückschlagventile kann grundsätzlich auch ein anderes Sperrmittel vorgesehen sein, beispielsweise ein Schieber. Das Sperrmittel, vorzugsweise ein Rückschlagventil, oder die mehreren Sperrmitel ist oder sind vorzugsweise nur dem Phasensteller oder der Pumpe zugeordnet, also im Strom des jeweiligen Fluids unmittelbar stromaufwärts von der betreffenden Komponente oder einem oder mehreren Steuermittel(n) für die betreffende Komponente angeordnet, um eine größtmögliche Versorgungssicherheit oder kürzest mögliche Ansprechzeit zu gewährleisten. Ist für den Phasensteller ein Druckspeicher vorgesehen, ist das Spenmittel für den Phasensteller vorzugsweise stromaufwärts von dem Druckspeicher angeordnet. Die Kombination eines Phasenstellers mit einem solchen Sperrmittel, vorzugsweise in Kombination mit dem Druckspeicher, ist ein weiterer eigenständiger Gegenstand der Erfindung. Sowohl der Druckspeicher als auch das Sperrmittel, vorzugsweise beide Komponenten in Kombination, dient der Sicherstellung eines ausreichenden Fluiddrucks, auch in kritischen Situationen, beispielsweise bei niedriger Drehzahl einer der Versorgung dienenden Pumpe oder einer durch die Bremskraftmaschine stark gedrosselten Fluidzuführung.

In einer Weiterbildung verfügt die Vorrichtung über eine Detektionseinrichtung zur Ermittlung der Drehwinkelposition der zu verstellenden Nockenwelle. Die Detektionseinrichtung weist in bevorzugten Ausführungen einen Drehwinkelgeber, vorzugsweise ein Geberrad, und einen dem Geber zugeordneten Sensor auf, der die Position des Sensors detektiert. Der Geber ist vorteilhafterweise mit dem zweiten Rotor verdrehgesichert verbunden. Falls dieser über Getrieberäder auf die zu verstellende Nockenwelle abtreibt, kann der Geber auch verdrehgesichert mit einem dieser Geberräder oder fest mit einem andersartigen Getriebeglied, beispielsweise Zahnriemen, verbunden sein. Vorzugsweise ist der Sensor in oder an dem Anbaugehäuse angeordnet. Der Drehwinkelgeber weist Marken auf, beispielsweise optisch oder vorzugsweise taktil detektierbare Marken. Entsprechend kann der Sensor beispielsweise ein optischer Sensor oder vorzugsweise ein taktiler Sensor sein. Der Drehwinkelgeber kann insbesondere als Geberrad mit wenigstens einem abragenden Vorsprung, vorzugsweise über den Umfang verteilt mehreren abragenden Vorsprüngen, gebildet sein, den oder die der Sensor abtastet.

Die Erfindung betrifft über den Phasensteller und die in oder an einem gemeinsamen Anbaugehäuse mit dem Phasensteller vereinte Vakuumpumpe hinaus auch eine Brennkraftmaschine mit der montierten Einheit. Der erst Rotor des Phasenstellers wird mit einer zu der Kurbelwelle der Brennkraftmaschine proportionalen Drehzahl angetrieben, die üblicherweise bei Viertaktmotoren die halbe Drehzahl der Kurbelwelle ist. In bevorzugten Ausführungen ist der erste Rotor mechanisch mit der Kurbelwelle gekoppelt, bezieht seinen Antrieb also von der Kurbelwelle. Der zweite Rotor ist vorzugsweise verdrehgesichert an oder auf der Nockenwelle montiert, Das Anbaugehäuse ist vorzugsweise an dem Maschinengehäuse der Brennkraftmaschine, beispielsweise an einem Zylinderkopf montiert, Die Brennkraftmaschine kann insbesondere den Motor eines Fahrzeugs, vorzugsweise eines Automobils, bilden. Das von der Vakuumpumpe mit Unterdruck zu versorgende Aggregat kann insbesondere ein Bremskraftverstärker oder ein anderes Servo-Aggregat des Fahrzeugs sein.

Vorteilhafte Merkmale werden auch in den Unteransprüchen und deren Kombinationen beschrieben.

Nachfolgend werden Ausführungsbeispiele der Erfindung anhand von Figuren erläutert. An den Ausführungsbeispielen offenbar werdende Merkmale bilden je einzeln und in jeder Merkmalskombination die Gegenstände der Ansprüche und auch die vorstehend beschriebenen Ausgestaltungen vorteilhaft weiter. Es zeigen:
- Figur 1: eine an einer Brennkraftmaschine montierte Vorrichtung eines ersten Ausführungsbeispiels,
- Figur 2: den Schnitt A-A der Figur 1,
- Figur 3: die Vorrichtung des ersten Ausführungsbeispiels in schematischer Darstellung,
- Figur 4: eine Vorrichtung eines zweiten Ausführungsbeispiels,
- Figur 5: eine Vorrichtung eines dritten Ausführungsbeispiels,
- Figur 6: eine Vorrichtung eines vierten Ausführungsbeispiels und
- Figur 7: eine Vorrichtung eines fünften Ausführungsbeispiels.

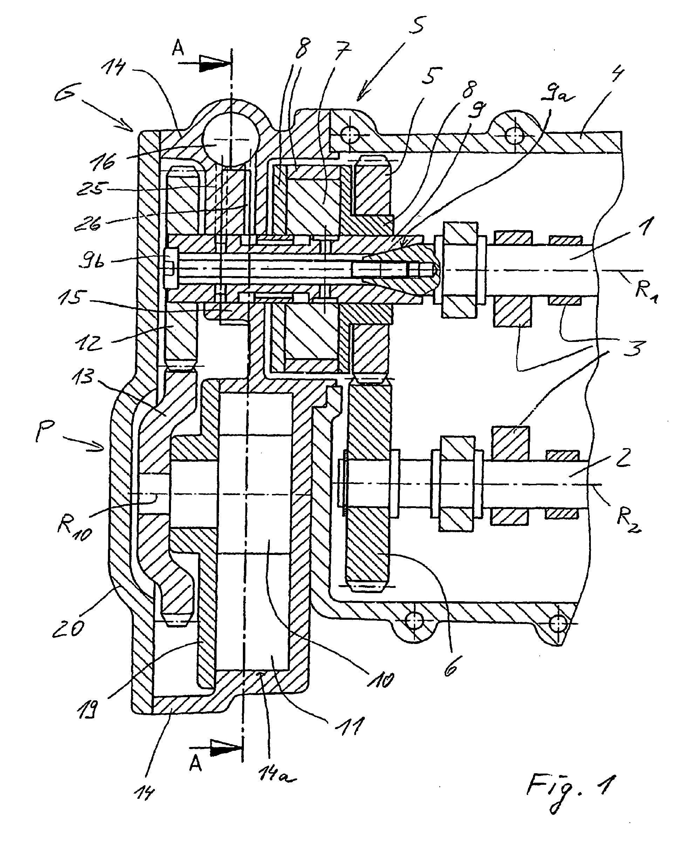

Figur 1 zeigt einen Phasensteller S und eine Vakuumpumpe P, die mittels eines gemeinsamen Anbaugehäuses G an einer Brennkraftmaschine angeordnet sind. Die Brennkraftmaschine weist zwei nebeneinander angeordnete Nockenwellen 1 und 2 mit Nocken 3 auf, von denen die eine der Steuerung von Einlassventilen und die andere der Steuerung von Auslassventilen der Brennkraftmaschine dient. Die Nockenwellen 1 und 2 sind in einem Maschinengehäuse 4, im Ausführungsbeispiel ein Zylinderkopf, der Brennkraftmaschine um die jeweilige Drehachse R₁ und R₂ drehbar angeordnet. Die Nockenwelle 1 wird von einer Kurbelwelle der Brennkraftmaschine angetrieben, beispielsweise über einen Antriebsrad, das an einem vom Phasensteller S abgewandten, nicht dargestellten Ende der Nockenwelle 1 angeordnet ist.

Der Phasensteller 5 weist ein Getrieberad 5 auf, über das er die Nockenwelle 2 antreibt. Das Getrieberad 5 ist ein außenverzahntes Stirnzahnrad. Es steht mit einem weiteren Getrieberad 6, das ebenfalls als außenverzahntes Stirnzahnrad gebildet ist, in einem Zahneingriff. Das Getrieberad 6 ist mit der Nockenwelle 2 verdrehgesichert verbunden. Die Nockenwelle 1 wird somit in nicht veränderbarer Phasenlage zur Kurbelwelle von dieser angetrieben. Die Phasenlage der Nockenwelle 2 ist hingegen mittels des Phasenstellers S relativ zur Kurbelwelle und relativ zur Nockenwelle 1 verstellbar. Sie wird über den Phasensteller S angetrieben.

Der Phasensteller S umfasst einen ersten Rotor 7 und einen zweiten Rotor 8, die um die Drehachse R₁ der Nockenwelle 1 relativ zueinander über einen vorgegebenen Drehwinkelverstellbereich drehbeweglich sind. Der erste Rotor 7 ist verdrehgesichert mit der Nockenwelle 1 und der zweite Rotor 8 ist verdrehgesichert mit dem Getrieberad 5 verbunden. Bei drehender Kurbelwelle nimmt der erste Rotor 7 bei seiner Drehbewegung den zweiten Rotor 8 mit, der allerdings innerhalb des Drehwinkelverstellbereichs in seiner Phasenlage relativ zu dem ersten Rotor 7 verstellbar ist. Die Phasenlage der Nockenwelle 2 relativ zur Kurbelwelle entspricht der Phasenlage des zweiten Rotors 8 relativ zum ersten Rotor 7.

Die Vakuumpumpe P ist eine Rotationspumpe, im Ausführungsbeispiel eine Flügelzellenpumpe. Sie umfasst einen Rotor 10 und einen von dem Rotor 10 linear beweglich geführten Flügel 11, die ein Förderglied 10, 11 der Pumpe P bilden. Der Rotor 10 ist um eine Drehachse R₁₀ drehbar, die von der Drehachse R₁ parallel beabstandet ist. Das Förderglied 10, 11 wird von der Kurbelwelle über den Phasensteller S drehangetrieben. Dem Drehantrieb dient ein außenachsiges Stirnzahnradgetriebe bestehend aus einem verdrehgesichert mit dem ersten Rotor 7 verbundenen Getrieberad 12 und einem verdrehgesichert mit dem Rotor 10 der Vakuumpumpe P verbundenen Getrieberad 13. Die Getrieberäder 12 und 13 stehen miteinander in einem Zahneingriff. Die Vakuumpumpe P wird über das von den Getrieberädern 12 und 13 gebildete außenachsige Stirnradgetriebe mit einer Untersetzung, d.h. mit geringerer Drehzahl als der die Pumpe P antreibende Rotor 7, angetrieben. Durch die Untersetzung ins Langsame kann die Reibleistung und entsprechend der Verschleiß, ferner auch das Geräusch der Pumpe P gering gehalten werden. In ebenfalls bevorzugten alternativen Ausführungen kann bei Umkehrung der Übersetzungsverhältnisse die Pumpe P mit einer höheren Drehzahl als der antreibende Rotor 7 angetrieben und dadurch die Größe der Pumpe P verringert werden.

Das Förderglied 10, 11 ist in einer Pumpenkammer aufgenommen, die von dem Anbaugehäuse G gebildet wird. Das Anbaugehäuse G besteht im Wesentlichen aus einem Anbaugehäuseteil 14, das zu einem größeren Teil die Wandung der Pumpenkammer bildet, einem die Pumpenkammer abschließenden inneren Gehäusedeckel 19 und einem das Anbaugehäuseteil 14 nach außen abschließenden äußeren Gehäusedeckel 20. Das Anbaugehäuse G ist am Maschinengehäuse 4, im Ausführungsbeispiel dem Zylinderkopf, befestigt. Der Befestigung dient ausschließlich das Anbaugehäuseteil 14, das hierfür um eine seitliche Öffnung des Maschinengehäuses 4 vollständig laufend einen Anschlussflansch für eine feste und dichte Befestigung bildet. Das Anbaugehäuse G weist für die Vakuumpumpe P auf einer Niederdruckseite einen Einlass für ein Fluid, vorzugsweise Luft, und auf einer Auslassseite einen Auslass für das angesaugte, im Druck erhöhte Fluid auf. An den Einlass der Pumpe P ist ein Aggregat oder sind mehrere Aggregate angeschlossen, das oder die mit dem Unterdruck versorgt wird oder werden, beispielsweise ein nicht dargestellter Bremskraftverstärker.

Das Anbaugehäuse G ist bezüglich der Vakuumpumpe P als solche geschlossen, abgesehen von den notwendigen Anschlüssen, und für den Phasensteller S zur Seite der Brennkraftmaschine hin offen. Im montierten Zustand schließt es das Maschinengehäuse 4 um die Drehachse R₁ herum fluiddicht ab. Das Anbaugehäuse G lagert den ersten Rotor 7 in solch einer Position und Ausrichtung relativ zu seiner Kontaktfläche mit dem Maschinengehäuse 4, dass die Drehachse R₁ des Rotors 7 mit der Drehachse R₁ der Nockenwelle 1 im positionierten Zustand des Anbaugehäuses G fluchtet und der Rotor 7 dementsprechend verdrehgesichert mit der Nockenwelle 1 und das Anbaugehäuse G mit dem Maschinengehäuse 4 verbunden werden können. Ein Monteur oder vorzugsweise Montageroboter muss den Phasensteller S für die Montage insbesondere des ersten Rotors 7, nicht separat greifen und positionieren. Handhabung und Positionierung des Phasenstellers S erfolgen einheitlich mit der Handhabung und Positionierung des Anbaugehäuses G. Die Vorrichtung bildet somit eine Montageeinheit. Mit der Montage des Anbaugehäuses G ist gleichzeitig auch die Pumpe P montiert.

Aufgrund der Anordnung des Phasenstellers S und der Vakuumpumpe P nebeneinander und mit axialer Überlappung ist die gesamte Vorrichtung vorteilhaft flach. Der Teil des Anbaugehäuses G, der die Vakuumpumpe P beherbergt, ist neben dem Teil des Anbaugehäuses G angeordnet, der den Phasensteller S lagert und zumindest über einen Teil seiner axialen Länge auch umgibt. Entsprechend sind der Anschlussflansch des Anbaugehäuses G und der die Vakuumpumpe P beherbergende Teil nebeneinander angeordnet. Eine Wandung des Anbaugehäuses G liegt in Kontakt mit dem Maschinengehäuse 4 an diesem neben dem Anschlussflansch an. Das Maschinengehäuse 4 könnte in einer Modifikation auch eine Wandung des die Pumpe P beherbergenden Teils des Anbaugehäuses G, im Ausführungsbeispiel eine Wandung der Pumpenkammer, bilden. In Bezug auf die Dichtigkeit ist jedoch eine vollständige Umhüllung der Pumpenkammer durch das Anbaugehäuse G vorteilhafter.

Das Anbaugehäuse G, im Ausführungsbeispiel das Anbaugehäuseteil 14, lagert den ersten Rotor 7 des Phasenstellers S um die Drehachse R₁ der Nockenwelle 1 drehbar. Es bildet mit einer verdrehgesichert mit dem Rotor 7 verbundenen Welle 9 ein Drehgelenk, im Ausführungsbeispiel ein Drehgleitlager. Das Anbaugehäuse G bildet eine Buchse 15 der Drehlagerung. Die Welle 9 durchragt die Buchse 15. Der erste Rotor 7 ist zwischen der Buchse 15 und der Nockenwelle 1 angeordnet, und das Getrieberad 12 sitzt an der von der Nockenwelle 1 abgewandten Seite der Buchse 15 auf dem dort die Buchse 15 durchragenden Ende der Welle 9.

Die Welle 9 verlängert die Nockenwelle 1 über deren axiales Ende. Die Nockenwelle 1 und die Welle 9 sind mittels Pressverbindung miteinander verbunden. Für die Pressverbindung weist die Nockenwelle 1 an ihrem Ende einen Außenkonus und die Welle 9 einen angepasst geformten Innenkonus 9a auf. Die zur Drehachse R₁ geneigten Konusflächen werden im montierten Zustand mittels einer zentralen Befestigungsschraube 9b, die die hohle Welle 9 durchragt und in axialer Richtung mit der Nockenwelle 1 verschraubt ist, axial auf- und gegeneinander gepresst.

Der Phasensteller S ist fluidisch verstellbar. Für die Verstellung wird er gemeinsam mit der Brennkraftmaschine mit einem Drucköl versorgt, das für die Brennkraftmaschine als Schmieröl und für den Phasensteller S als Druckfluid für die Verstellung der Phasenlage verwendet wird. Was die Lagerung des ersten Rotors 7 betrifft, könnten der Rotor 7 und die Welle 9 in einem Stück geformt sein. Die Welle 9 erfüllt in Doppelfunktion jedoch auch die Funktion der Fluidverteilung für den Phasensteller S, dient also als Fluidverteilerwelle. Sie ist nicht zuletzt aus daraus sich ergebenden fertigungstechnischen Gründen separat vom Rotor 7 geformt und mit dem Rotor 7 verdrehgesichert verbunden.

Das Anbaugehäuse G, im Ausführungsbeispiel das Anbaugehäuseteil 14, dient nicht nur der Lagerung des Phasenstellers S, nämlich der direkten Drehlagerung des ersten Rotors 7 und der über die Welle 9 als Zwischenglied indirekten Drehlagerung des zweiten Rotors 8, sondern weist auch Steuerleitungen in Form integrierter Fluidkanäle für die Zufuhr und Abfuhr des Druckfluids für den Phasensteller auf. Von den Fluidzu- und -abführungen sind in Figur 1 zwei Steuerleitungen 25 und 26 und ein Aufnahmeraum 16, im Ausführungsbeispiel eine Bohrung, zu erkennen. Die Rotoren 7 und 8 werden über den Aufnahmeraum 16 und die Steuerleitungen 25 und 26 für die Verstellung der Phasenlage mit dem Druckfluid beaufschlagt.

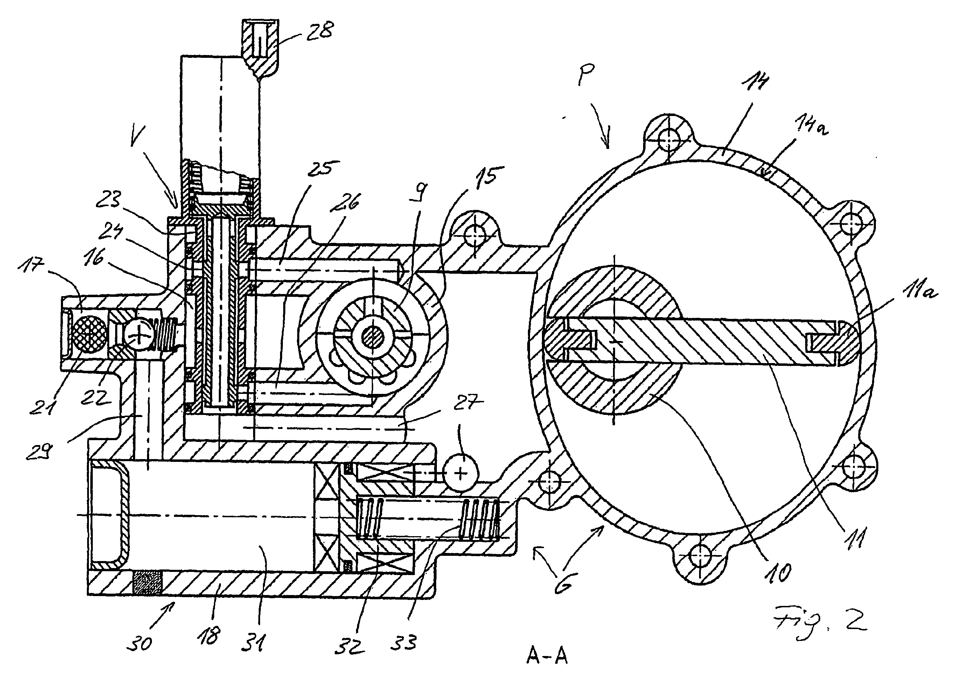

Figur 2 zeigt die Vorrichtung in dem in Figur 1 eingetragenen Schnitt A-A. Dargestellt sind ferner in Figur 1 nicht gezeichnete, außerhalb der Schnittebene der Figur 1 angeordnete Komponenten für die Beaufschlagung des Phasenstellers S mit dem Druckfluid. Zu erkennen ist unter anderem, das in der vom Anbaugehäuse G gebildeten Pumpenkammer aufgenommene Förderglied 10, 11. Das Anbaugehäuseteil 14 bildet einen topfförmigen Teil der Pumpenkammer mit einem dem Maschinengehäuse 4 zugewandten Boden (Figur 1) und einer vom Boden umlaufend aufragenden Seitenwandung, die an ihrer Mantelinnenfläche eine Lauffläche 14a für das Förderglied 10, 11 bildet. Das Förderglied 10, 11 weist wie bereits erwähnt den Rotor 10 auf, den das Anbaugehäuse G um die Drehachse R₁₀ drehbar lagert, und den quer zur Drehachse R₁₀ vom Rotor 10 linear beweglich geführten Flügel 11, an dessen beiden Enden Gleitelemente 11a angeordnet sind, die bei einem Drehantrieb des Förderglieds 10, 11 längs der Lauffläche 14a gleiten. Der Flügel 11 teilt die Pumpenkammer in zwei Kammern, die sich pro Umlauf des Flügels 11 periodisch einmal vergrößern und verkleinern und auf diese Weise das Fluid am Einlass der Pumpe P ansaugen und durch den Auslass ausstoßen.

In Figur 2 sind auch die beiden Steuerleitungen 25 und 26 dargestellt. Der Schnitt A-A verläuft in Figur 2 oberhalb der Drehachse R₁ durch den Steuerkanal 25 und unterhalb der Drehachse R₁ durch den Steuerkanal 26. Die Steuerkanäle 25 und 26 sind, wie Figur 1 zeigt, längs der Drehachse R₁ zueinander versetzt. Durch den Aufnahmeraum 16 verläuft der Schnitt A-A zentral. Mit dem durch die Steuerleitung 25 herangeführten Druckfluid wird der zweite Rotor 8 relativ zum ersten Rotor 7 in die eine Richtung seiner relativen Drehbeweglichkeit und mit dem durch die Steuerleitung 26 herangeführten Druckfluid in die andere Richtung beaufschlagt. Das durch eine der Steuerleitungen 25 und 26 herangeführte Druckfluid wird über einen zentralen Hohlraum und das durch die andere der Steuerleitungen 25 und 26 herangeführte Druckfluid durch einen peripheren Kanal der Welle 9 zwischen die Rotoren 7 und 8 geleitet, so dass der zweite Rotor 8 einmal in die eine und das andere Mal in die andere Drehrichtung relativ zu dem ersten Rotor 7 verstellt wird.

In dem Aufnahmeraum 16 ist ein Steuermittel V, im Ausführungsbeispiel ein Steuerventil, mit einem relativ zum Anbaugehäuseteil 14 nicht beweglichen Ventilzylinder 23 und einem im Ventilzylinder 23 bewegbaren Ventilkolben 24 aufgenommen. Das Steuermittel V kann insbesondere als Proportionalventil oder Schaltventil ausgeführt sein. Der Ventilkolben 24 ist zwischen zwei Endpositionen axial hin und her beweglich. Figur 2 zeigt den Ventilkolben 24 in einer Neutralposition zwischen den beiden Endpositionen. In der Neutralposition verschließt er beide Steueröffnungen des Ventilzylinders 23, von denen die eine mit der Steuerleitung 25 und die andere mit der Steuerleitung 26 verbunden ist. Bei einer Bewegung aus der Neutralposition in Richtung auf die eine der Endpositionen wird jeweils eine der Steuerleitungen 25 und 26 über das Steuermittel V mit einer Hochdruckseite einer Druckfluidversorgung verbunden, während die jeweils andere der Steuerleitungen 25 und 26 von der Hochdruckseite getrennt ist. Durch die jeweils von der Hochdruckseite der Druckfluidversorgung getrennte Steuerleitung 25 oder 26 strömt das Druckfluid vom Phasensteller S ab und wird über eine Rückführleitung 27 zu einer Niederdruckseite der Druckfluidversorgung geführt. Mit "28" ist ein Anschluss bezeichnet, über den das Steuermittel V mit elektrischer Energie versorgt und mit Steuersignalen angesteuert wird.

Das Anbaugehäuseteil 14 bildet einen weiteren Aufnahmeraum 17, über den die Vorrichtung im montierten Zustand an die Druckfluidversorgung für den Phasensteller S angeschlossen ist, wobei das Druckfluid auch als Schmiermittel für die Vakuumpumpe genutzt wird. Das Anbaugehäuse G bildet somit bei dem weiteren Aufnahmeraum 17 auch einen Fluidanschluss für die Vorrichtung. Vom Anschluss führt ein Verbindungskanal in den Aufnahmeraum 17. In dem Verbindungskanal ist ein Filter 21, vorzugsweise ein Sieb, angeordnet. Der weitere Aufnahmeraum 17 ist im Schnitt der Figur 1 nicht dargestellt, ferner zeigt Figur 1 den Aufnahmeraum 16 ohne das Steuermittel V.

Zwischen dem Anschluss für das Druckfluid und dem Phasensteller S ist ein Sperrmittel 22, im Ausführungsbeispiel ein Rückschlagventil, angeordnet, das den Phasensteller S gegen einen Druckabfall in der Druckfluidversorgung sichert. Das Rückschlagventil 22 ist noch stromaufwärts von dem Steuermittel V angeordnet, im Ausführungsbeispiel ist es in dem weiteren Aufnahmeraum 17 angeordnet. Das Druckfluid strömt bei einer Verstellung der Phasenlage somit ab Erreichen eines durch das Rückschlagventil 22 vorgegebenen minimalen Überdrucks über den Anschluss, das Filter 21 und das Rückschlagventil 22 zum Steuermittel V und von dort entsprechend der axialen Position des Ventilkolbens 24 zum Phasensteller S.

Um eine ausreichende Stellgeschwindigkeit des Phasenstellers S bei Druckschwankungen in der Druckfluidversorgung zu gewährleisten, ist dem Phasensteller S ein Druckspeicher 30 zugeordnet. Der Druckspeicher 30 ist im Druckfluidkreis stromaufwärts von dem Steuermittel V und stromabwärts von dem Rückschlagventil 22 angeordnet. Stromabwärts von dem Rückschlagventil 22, genauer gesagt stromabwärts von einem Ventilsitz des Rückschlagventils 22, zweigt eine Verbindungsleitung 29 zum Druckspeicher 30 ab.

Das Anbaugehäuse G, im Ausführungsbeispiel wieder das Anbaugehäuseteil 14, bildet eine feste Wandung 18 einer Druckkammer 31 des Druckspeichers 30. Die Druckkammer 31 ist im Ausführungsbeispiel kreiszylindrisch, könnte grundsätzlich aber auch zylindrisch mit einem anderen Querschnitt sein. Die Druckkammer 31 ist an einer Seite mit einem Stopfen oder Deckel fluiddicht verschlossen. Von diesem Deckel oder Stopfen abgesehen bildet das Anbaugehäuseteil 14 alle festen Wandstrukturen der Druckkammer 31. In der Druckkammer 31 ist in Zylinderlängsrichtung ein Kolben 32 hin und her beweglich aufgenommen. Der Kolben 32 bildet eine bewegliche Wandstruktur der Druckkammer 31. Am Anbaugehäuseteil 14 ist ferner eine Feder 33 abgestützt, im Ausführungsbeispiel eine Spiralfeder. Die Feder 33 ist mit Vorspannung zwischen dem Anbaugehäuseteil 14 und dem Kolben 32 angeordnet und beaufschlagt mit ihrer Elastizitätskraft den Kolben 32 in Richtung auf eine Verkleinerung des Volumens der Druckkammer 31. Der Druckspeicher 30 ist so ausgelegt, nach Kammervolumen und Federspannung, dass stets gewährleistet ist, dass der Phasensteller S wenigstens einen Stellvorgang mit der geforderten hohen Stellgeschwindigkeit ausführt. Der Druckspeicher 30 ist in Figur 1 nicht dargestellt. Er ist außerhalb der Schnittebene der Figur 1 angeordnet und wäre in Figur 1 nur im Umriss zu erkennen.

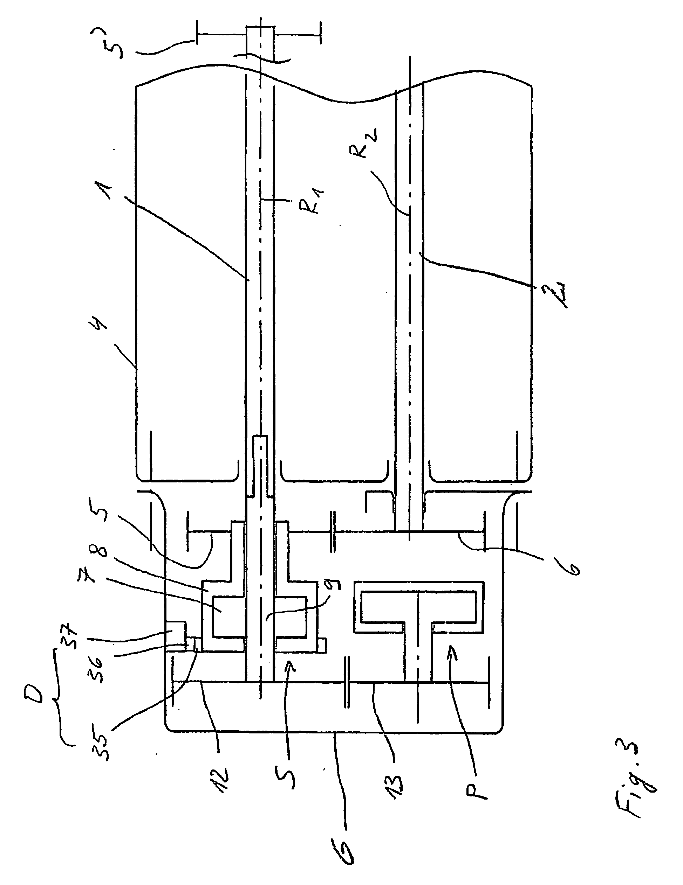

Figur 3 zeigt die Brennkraftmaschine mit der montierten Vorrichtung des ersten Ausführungsbeispiels in einer schematischen Darstellung, die den Vergleich mit alternativen Ausführungsbeispielen erleichtert. Angedeutet ist ein Antriebsrad 5', das am anderen stirnseitigen Ende der Nockenwelle 1 angeordnet und verdrehgesichert mit dieser verbunden ist. Die Nockenwelle 1 wird über das Antriebsrad 5' von der Kurbelwelle angetrieben. Alternativ könnte das Antriebsrad 5' auch auf der anderen Seite beim Phasensteller S angeordnet sein, beispielsweise noch auf der Nockenwelle 1, in der Figur 3 rechts vom Phasensteller S, oder vorzugsweise an dem von der Nockenwelle 1 abgewandten Ende des Phasenstellers S zwischen dem Phasensteller S und dem Getrieberad 12 oder noch bevorzugter auch noch an der vom Phasensteller S abgewandten Seite des Getrieberads 12. In derartigen Ausführungen ist die Welle 9 (Figur 1) vorzugsweise aus dem Anbaugehäuse G herausgeführt und das Antriebsrad 5' außerhalb des Anbaugehäuses G verdrehgesichert mit der Welle 9 verbunden. In noch einer alternativen Variante kann das Getrieberad 5 das Antriebsrad für die Nockenwellen 1 und 2, den Phasensteller S und die Vakuumpumpe P bilden, indem es mit einem von der Kurbelwelle angetriebenen weiteren Getriebeglied in einem Zahneingriff ist. In solch einer Ausführung würde der Phasensteller S die Phasenlage der Nockenwelle 1 verstellen, während die Nockenwelle 2 in fester Drehzahlbeziehung zur Kurbelwelle angetrieben würde. Hinsichtlich der hier gewählten Sprachregelung wäre in derartigen Ausführungen der Rotor 8 der erste Rotor und der Rotor 7 der zweite Rotor.

Die Vorrichtung ist auch mit einer Detektionseinrichtung D zur Ermittlung der Drehwinkelposition der zu verstellenden Nockenwelle, im Ausführungsbeispiel die Nockenwelle 2, ausgestattet. Die Detektionseinrichtung D umfasst einen Drehwinkelgeber 35, beispielsweise ein Geberrad, der an dem zweiten Rotor 8 des Phasenstellers S angeordnet ist, so dass er dessen Drehbewegung mitmacht. Im Ausführungsbeispiel ist der Geber 35 an einer äußeren Umfangsfläche des Rotors 8 angeordnet und zwecks Mitnahme durch den Rotor 8 mit diesem verdrehgesichert verbunden. Dem Geber 35 ist gegenüberliegend zugewandt ein Sensor 36 angeordnet. Der Sensor 36 kann insbesondere am Anbaugehäuse G abgestützt sein. Zur Detektionseinrichtung D gehört ferner eine Auswerteeinrichtung 37, die vorzugsweise ebenfalls im oder am Anbaugehäuse G angeordnet ist und die Signale des Sensors 36 verarbeitet. Die Detektionseinrichtung D ist Teil einer Regelungseinrichtung für die Einstellung der Phasenlage des Rotors 8 und somit der Nockenwelle 2. Der Regelungseinrichtung wird von einer Steuerung der Brennkraftmaschine eine vom den momentanen Betriebszustand der Brennkraftmaschine abhängige Führungsgröße vorgegeben. Das Ausgangssignal der Detektionseinrichtung D wird als Regelgröße aufgegeben. Die Regelungseinrichtung bildet aus der Führungsgröße und der Regelgröße eine Stellgröße für den Phasensteller S, die dem Steuermittel V (Figur 2) aufgegeben wird. Vorzugsweise wird dem Steuermittel V über den Anschluss 28 die Stellgröße aufgegeben, Alternativ kann auch die Regelungseinrichtung in oder an dem Anbaugehäuse G angeordnet sein und dem Steuermittel V über den Anschluss 28 die Führungsgröße der übergeordneten Steuerung der Brennkraftmaschine aufgegeben werden.

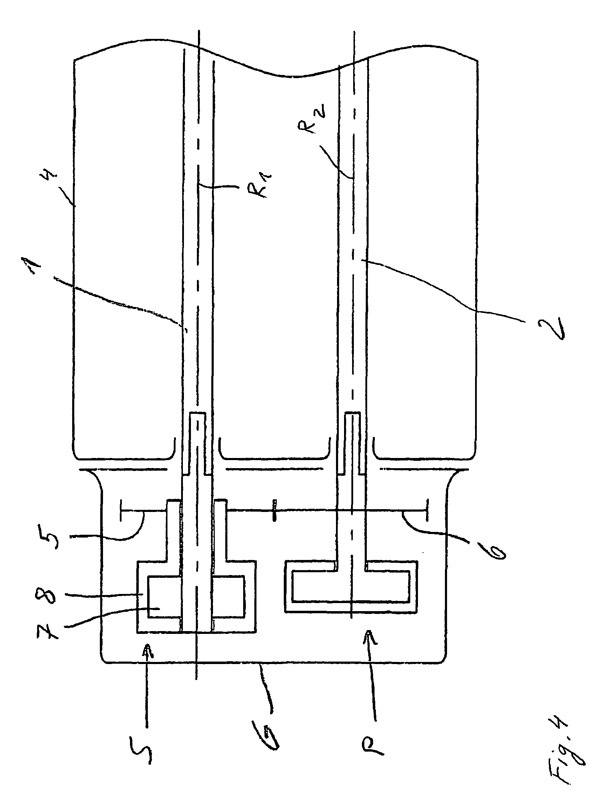

Figur 4 zeigt die Brennkraftmaschine mit einer Vorrichtung eines zweiten Ausführungsbeispiels im montierten Zustand in einer der Figur 3 entsprechenden schematischen Darstellung. Das zweite Ausführungsbeispiel unterscheidet sich vom ersten Ausführungsbeispiel nur hinsichtlich des Antriebs der Vakuumpumpe P. Das Förderglied 10, 11 der Vakuumpumpe ist im zweiten Ausführungsbeispiel verdrehgesichert mit dem Getrieberad 6 verbunden, so dass es drehsteif mit diesem und der Nockenwelle 2 vom zweiten Rotor 8 drehangetrieben wird. Die Getrieberäder 12 und 13 sind entfallen. Die Ausführungen zu den Antriebsvarianten des ersten Ausführungsbeispiels gelten auch für das zweite Ausführungsbeispiel.

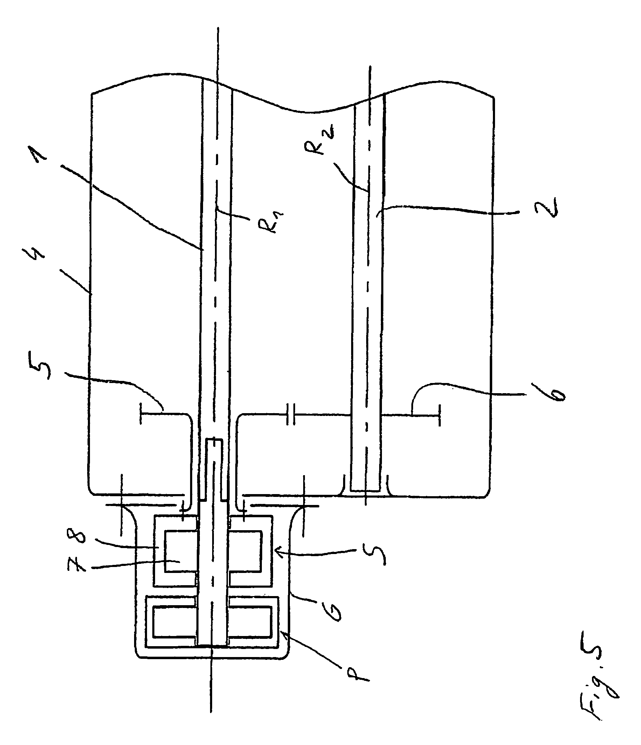

Figur 5 zeigt eine montierte Vorrichtung eines dritten Ausführungsbeispiels. Der Phasensteller S und das drehbewegliche Förderglied 10, 11 der Vakuumpumpe P sind axial zueinander versetzt längs der Drehachse R₁ der Nockenwelle 1 angeordnet. Der Rotor 7 ist wieder verdrehgesichert mit der Nockenwelle 1 verbunden und der Rotor 8 mit dem Antriebsrad 5. Die Vakuumpumpe P ist an der von der Nockenwelle 1 abgewandten Seite des Phasenstellers S angeordnet Der Rotor 10 der Vakuumpumpe P ist verdrehgesichert mit dem ersten Rotor 7 des Phasenstellers S verbunden. Somit wird der Rotor 7 über die Nockenwelle 1 von der Kurbelwelle angetrieben und nimmt den Rotor 8 bei der Drehbewegung entsprechend der relativen Phasenlage von Rotor 7 und Rotor 8 mit. Der Phasensteller S und die Vakuumpumpe P sind im gleichen Anbaugehäuse G angeordnet, das für die koaxiale Anordnung von Phasensteller S und Vakuumpumpe P gegenüber dem ersten und dem zweiten Ausführungsbeispiel entsprechend verlängert ist, Die Vakuumpumpe P ist wie in ersten Ausführungsbeispiel aus dem Kraftfluss herausgenommen, indem der Kraftfluss auf einer Abtriebseite des Phasenstellers S in eine Richtung über den Rotor 8 zur Nockenwelle 2 und in die andere Richtung zur Vakuumpumpe P verzweigt.

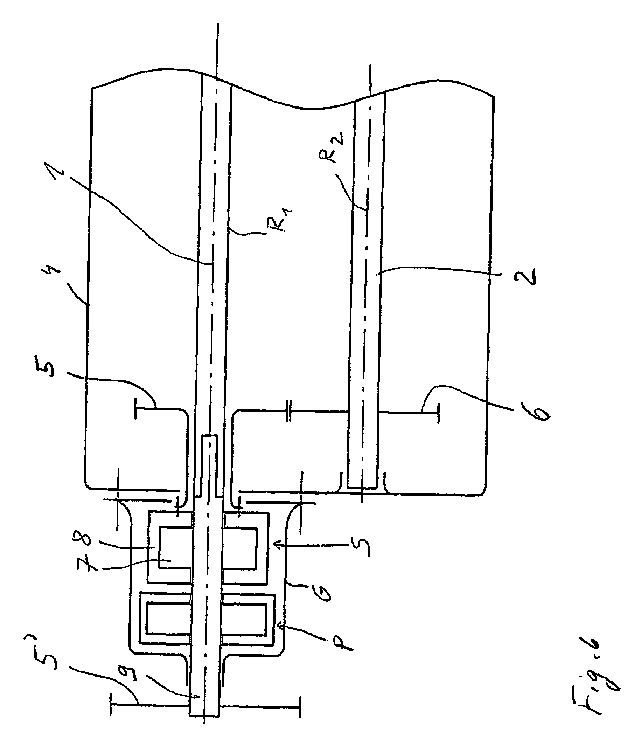

Figur 6 zeigt die montierte Vorrichtung in einem vierten Ausführungsbeispiel, das sich von dem dritten Ausführungsbeispiel dadurch unterscheidet, dass die Nockenwelle 1 über den Phasensteller S drehangetrieben wird, indem ein mit der Kurbelwelle gekoppeltes Antriebsrad 5' wie zum ersten Ausführungsbeispiel als Variante beschrieben an der gleichen Stirnseite der Nockenwelle 1 wie die Vorrichtung angeordnet ist. Die mit der Nockenwelle 1 verdrehgesichert verbundene Welle 9 durchragt das Anbaugehäuse G an der von der Nockenwelle 1 abgewandten Seite der Vorrichtung, so dass das Antriebsrad 5' außerhalb des Anbaugehäuses G an oder auf der Welle 9 angeordnet werden kann.

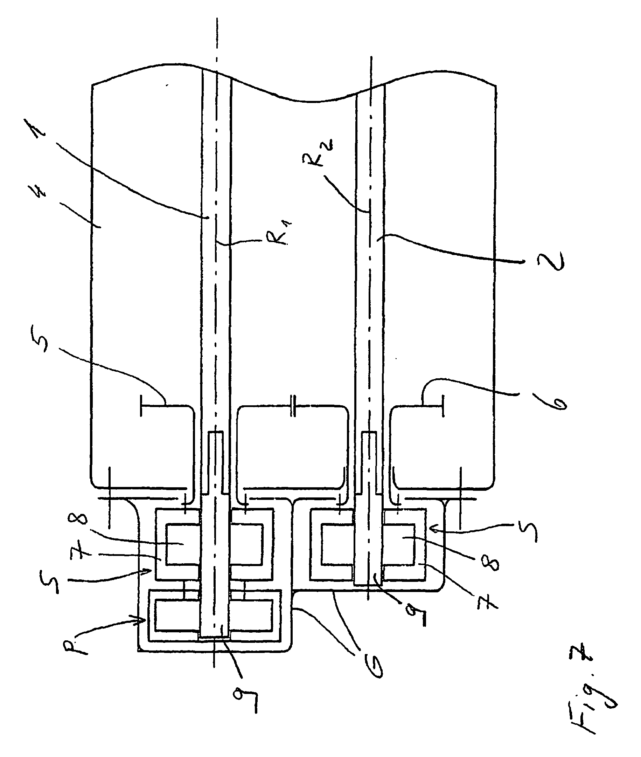

Figur 7 zeigt eine montierte Vorrichtung in einem fünften Ausführungsbeispiel. Die Vorrichtung umfasst zwei von einem vergrößerten Anbaugehäuse G gelagerte Phasensteller S, nämlich einen Phasensteller S für die Nockenwelle 1 und einen weiteren Phasensteller S für die Nockenwelle 2. Der zweite Rotor 8 des einen Phasenstellers S ist verdrehgesichert mit der Nockenwelle 1 und der zweite Rotor 8 des anderen Phasenstellers S ist verdrehgesichert mit der Nockenwelle 2 verbunden. Die ersten Rotoren 7 der beiden Phasensteller S sind je mit einem Getrieberad, der eine mit dem Getrieberad 5 und der andere mit dem weiteren Getrieberad 6, verdrehgesichert verbunden. Eines der Getrieberäder 5 und 6 wird von der Kurbelwelle angetrieben und treibt über den jeweils zugeordneten Phasensteller S auf die andere der Nockenwellen 1 und 2 ab. Ist beispielsweise die Nockenwelle 1 im Antriebsstrang näher bei der Kurbelwelle angeordnet, treibt die Kurbelwelle 1 über das Getrieberad 5 den Rotor 7 des zugeordneten Phasenstellers S, dieser den Rotor 8 des gleichen Phasenstellers S und der Rotor 8 die zu verstellende Nockenwelle 1 an. Ferner treibt das Getrieberad 5 auf das Getrieberad 6 ab. Vom Getrieberad 6 erfolgt der Abtrieb über den ersten Rotor 7 des weiteren Phasenstellers S auf dessen Rotor 8, der verdrehgesichert mit der Nockenwelle 2 verbunden ist. Der eine der Phasensteller S ist wie im dritten und vierten Ausführungsbeispiel gemeinsam mit der Vakuumpumpe P längs der Drehachse R₁ angeordnet. Sein zweiter Rotor 7 ist mit dem Förderglied 10, 11, d.h. dem Rotor 10 der Vakuumpumpe P, verdrehgesichert verbunden. Das Anbaugehäuse G, vorzugsweise ein in einem Stück geformtes Anbaugehäuseteil 14, lagert die zweiten Rotoren 7 jeweils direkt und die ersten Rotoren 8 indirekt über jeweils eine Welle 9 drehbar.

Soweit zu dem zweiten, dritten, vierten und fünften Ausführungsbeispielen keine Ausführungen gemacht werden, gelten die Ausführungen zum ersten Ausführungsbeispiel.

### Bezugszeichen:

- 1: Nockenwelle
- 2: Nockenwelle
- 3: Nocken
- 4: Maschinengehäuse, Zylinderkopf
- 5: Getrieberad
- 6: Getrieberad
- 7: erster Rotor
- 8: zweiter Rotor
- 9: Welle
- 9a: Schrägfläche, Innenkonus
- 9b: Befestigungsschraube
- 10: Rotor
- 11: Flügel
- 11 a: Gleitelement
- 12: Getrieberad
- 13: Getrieberad
- 14: Anbaugehäuseteil
- 15: Lagerbuchse
- 16: Aufnahmeraum
- 17: Aufnahmeraum, Anschluss
- 18: Druckkammer-Wandstruktur
- 19: Innerer Deckel
- 20: Äußerer Deckel
- 21: Filter, Sieb
- 22: Sperrmittel, Rückschlagventil
- 23: Ventilzylinder
- 24: Ventilkolben
- 25: Steuerleitung
- 26: Steuerleitung
- 27: Rückführleitung
- 28: Anschluss
- 29: Fluidleitung
- 30: Druckspeicher
- 31: Druckkammer
- 32: Kolben
- 33: Feder
- 34: -
- 35: Drehwinkelgeber
- 36: Sensor
- 37: Auswerteeinrichtung
- D: Detektionseinrichtung
- G: Anbaugehäuse
- P: Pumpe
- S: Phasensteller
- V: Steuermittel, Steuerventil
- R₁: Drehachse
- R₂: Drehachse
- R₁₀: Drehachse

## Patentansprüche

1. Vorrichtung zur Verstellung der Phasenlage einer Nockenwelle (1, 2) einer Brennkraftmaschine und Versorgung eines Aggregats mit einem Unterdruck, die Vorrichtung umfassend:
a) einen mit einem Druckfluid verstellbaren Phasensteller (S) für die Verstellung der Phasenlage der Nockenwelle (1, 2) relativ zu einer Kurbelwelle der Brennkraftmaschine,
b) eine Vakuumpumpe (P) für das Aggregat
c) und ein an einem Maschinengehäuse der Brennkraftmaschine montierbares Anbaugehäuse (G) für die Vakuumpumpe,
d) wobei das Anbaugehäuse (G) auch für den Phasensteller (S) ein Gehäuse oder zumindest einen Gehäusedeckel bildet,
**dadurch gekennzeichnet, dass**
e) der Phasensteller (S) durch das Anbaugehäuse (G) mit dem Druckfluid versorgbar ist.

2. Vorrichtung nach Anspruch 1, **dadurch gekennzeichnet, dass** der Phasensteller (S) einen ersten Rotor (7) für einen von der Drehzahl der Kurbelwelle abhängigen Antrieb und einen zweiten Rotor (8) für einen Abtrieb auf die Nockenwelle (1, 2) aufweist und das Anbaugehäuse (G) wenigstens einen der Rotoren (7, 8) direkt oder über wenigstens ein Zwischenglied (9) drehbar lagert.

3. Vorrichtung nach dem vorhergehenden Anspruch, **dadurch gekennzeichnet, dass** das Anbaugehäuse (G) einen der Rotoren (7, 8) direkt und den anderen über wenigstens ein Zwischenglied (9) drehbar lagert.

4. Vorrichtung nach einem der vorhergehenden Ansprüche, **dadurch gekennzeichnet, dass** der Phasensteller (S) einen Rotor (7, 8) aufweist und das Anbaugehäuse (G) diesen Rotor (7, 8) direkt oder über wenigstens ein Zwischenglied in einer Position und Ausrichtung drehbar lagert, in der dieser Rotor (7, 8) bei Montage des Anbaugehäuses (G) verdrehgesichert an oder auf der Nockenwelle (1, 2) oder einer weiteren Nockenwelle (2, 1) der Brennkraftmaschine montierbar ist.

5. Vorrichtung nach einem der drei vorhergehenden Ansprüche, **dadurch gekennzeichnet, dass** einer der Rotoren (7, 8) mittels einer Pressverbindung, vorzugsweise mittels aufeinander schiebbaren Schrägflächen (9a), mit der Nockenwelle (1, 2) verbindbar ist.

6. Vorrichtung nach einem der vorhergehenden Ansprüche, **dadurch gekennzeichnet, dass** die Brennkraftmaschine eine weitere Nockenwelle (2, 1) aufweist, eine der Nockenwellen (1, 2) an einem axialen Ende angetrieben wird und der Phasensteller (S) an dem anderen axialen Ende von einer der Nockenwellen (1, 2) montierbar ist.

7. Vorrichtung nach einem der vorhergehenden Ansprüche, **dadurch gekennzeichnet, dass** der Phasensteller (S) und die Vakuumpumpe (P) miteinander gekoppelt sind und der Phasensteller die Vakuumpumpe oder die Vakuumpumpe den Phasensteller antreibt.

8. Vorrichtung nach einem der vorhergehenden Ansprüche, **dadurch gekennzeichnet, dass** der Phasensteller (S) eine Antriebseite (9a) aufweist, auf der ein den Phasensteller antreibendes Drehmoment einleitbar ist, und sich ein Kraftfluss auf einer Abtriebseite des Phasenstellers (S) zu einem ersten Abtriebsende (5) und einem anderen, zweiten Abtriebsende (12) verzweigt und dass die zu verstellende Nockenwelle (1, 2) über das erste Abtriebsende und die Vakuumpumpe (P) über das zweite Abtriebsende angetrieben wird.

9. Vorrichtung nach einem der vorhergehenden Ansprüche, **dadurch gekennzeichnet, dass** der Phasensteller (S) einen ersten Rotor (7) für einen von der Drehzahl der Kurbelwelle abhängigen Antrieb und einen zweiten Rotor (8) für einen Abtrieb auf die Nockenwelle (1, 2) aufweist und das Anbaugehäuse (G) ein Getriebeglied (5), über das die Nockenwelle (1, 2) von einem der Rotoren (7, 8) oder einer der Rotoren (7, 8) antreibbar ist, direkt oder über wenigstens ein Zwischenglied (9) drehbar lagert.

10. Vorrichtung nach einem der vorhergehenden Ansprüche, **dadurch gekennzeichnet, dass** wenigstens eines der folgenden Merkmale erfüllt ist:
- die Brennkraftmaschine weist wenigstens zwei Nockenwellen (1, 2) auf, die mittels Getriebegliedern (5, 6) für einen gemeinsamen Antrieb miteinander koppelbar sind, und dass das Anbaugehäuse (G) wenigstens eines (5) der Getriebeglieder (5, 6) direkt oder über wenigstens ein Zwischenglied (9) lagert,
- der Phasensteller (S) und die Vakuumpumpe (P) sind mittels Getriebegliedern (5, 6; 12, 13) miteinander gekoppelt und der Phasensteller treibt die Vakuumpumpe oder die Vakuumpumpe treibt den Phasensteller über die Getriebeglieder an,
- die Vakuumpumpe (P) wird über Getriebeglieder (12, 13) mit einer im Vergleich zum Phasensteller (S) höheren oder niedrigeren Drehzahl angetrieben,
- der Phasensteller (S) und die Vakuumpumpe (P) sind nebeneinander mit einer zumindest teilweisen axialen Überlappung angeordnet.

11. Vorrichtung nach dem vorhergehenden Anspruch, **dadurch gekennzeichnet, dass** der Phasensteller einen ersten Rotor (7) für einen von der Drehzahl der Kurbelwelle abhängigen Antrieb und einen zweiten Rotor (8) für einen Abtrieb auf die Nockenwelle (1, 2) aufweist und die Getriebeglieder (5, 6; 12, 13) einen der Rotoren (7, 8) mit der Vakuumpumpe (10, 11) koppeln.

12. Vorrichtung nach einem der zwei vorhergehenden Ansprüche, **dadurch gekennzeichnet, dass** die Getriebeglieder (5, 6; 12, 13) wenigstens ein auf Reib- oder Formschluss beruhendes Zugmittel umfassen oder ausschließlich Getrieberäder (5, 6; 12, 13), vorzugsweise Zahnräder sind.

13. Vorrichtung nach einem der vier vorhergehenden Ansprüche, **dadurch gekennzeichnet, dass** das Getriebeglied (5) oder wenigstens eines der Getriebeglieder (5, 6; 12, 13) in oder an dem Anbaugehäuse (G) angeordnet ist.

14. Vorrichtung nach einem der vorhergehenden Ansprüche, **dadurch gekennzeichnet, dass** ein Rotor (7, 8) des Phasenstellers (S) um eine erste Drehachse (R₁) und ein Förderglied (10, 11) der Vakuumpumpe (P) um eine andere, von der ersten Drehachse vorzugsweise parallel beabstandete zweite Drehachse (R₁₀) drehbar angeordnet sind.

15. Vorrichtung nach einem der Ansprüche 1 bis 13, **dadurch gekennzeichnet, dass** ein Rotor (7, 8) des Phasenstellers (S) und ein Förderglied (10, 11) der Vakuumpumpe (P) um eine gemeinsame Drehachse (R₁) drehbar angeordnet sind.

16. Vorrichtung nach dem vorhergehenden Anspruch, **dadurch gekennzeichnet, dass** das Förderglied (10, 11) mit dem Rotor (7, 8) verdrehgesichert verbunden oder mittels Getriebegliedern gekoppelt ist.

17. Vorrichtung nach einem der vorhergehenden Ansprüche, **dadurch gekennzeichnet, dass** der Phasensteller (S) hydraulisch, pneumatisch oder elektrisch verstellbar ist.

18. Vorrichtung nach einem der vorhergehenden Ansprüche, **dadurch gekennzeichnet, dass** der Phasensteller (S) mit einem Druckfluid, vorzugsweise hydraulisch, verstellbar und ein Druckspeicher (30) für das Druckfluid vorgesehen ist, um eine ausreichend große Stellgeschwindigkeit des Phasenstellers (S) zu gewährleisten.

19. Vorrichtung nach dem vorhergehenden Anspruch, **dadurch gekennzeichnet, dass** wenigstens eines der folgenden Merkmale erfüllt ist:
- das Anbaugehäuse (G) bildet eine Wandung (18) des Druckspeichers (30),
- der Druckspeicher (30) weist eine Druckkammer (31) auf, die von einer Wandstruktur (32) begrenzt wird, die gegen eine rückstellende Elastizitätskraft beweglich ist und vom Anbaugehäuse (G) abgestützt oder hin und her beweglich gelagert wird.

20. Vorrichtung nach dem vorhergehenden Anspruch, **dadurch gekennzeichnet, dass** wenigstens eines der folgenden Merkmale erfüllt ist:
- eine die Elastizitätskraft erzeugende Feder (33) stützt sich an dem Anbaugehäuse (G) ab,
- ein Kolben bildet die bewegliche Wandstruktur (32).

21. Vorrichtung nach einem der vorhergehenden Ansprüche, **dadurch gekennzeichnet, dass** wenigstens eines der folgenden Merkmale erfüllt ist:
- die Vakuumpumpe (P) ist durch das Anbaugehäuse (G) mit Schmieröl versorgbar,
- der Phasensteller (S) ist mit einem Druckfluid, vorzugsweise hydraulisch, verstellbar und über ein Maschinengehäuse (4) der Brennkraftmaschine oder die Nockenwelle (1, 2) oder eine weitere Nockenwelle (2,1) der Brennkraftmaschine mit dem Druckfluid versorgbar,
- der Phasensteller (S) ist mit einem Druckfluid, vorzugsweise hydraulisch, verstellbar und wenigstens eine Steuerleitung (25, 26) führt für eine Beaufschlagung des Phasenstellers (S) mit dem Druckfluid durch das Anbaugehäuse (G).

22. Vorrichtung nach einem der vorhergehenden Ansprüche, **dadurch gekennzeichnet, dass** der Phasensteller (S) mit einem Druckfluid, vorzugsweise hydraulisch, verstellbar und in einer Zuführung des Druckfluids ein Sperrmittel (22) angeordnet ist, vorzugsweise in dem Anbaugehäuse (G).

23. Vorrichtung nach dem vorhergehenden Anspruch, **dadurch gekennzeichnet, dass** wenigstens eines der folgenden Merkmale erfüllt ist:
- das Sperrmittel (22) ist stromaufwärts von dem Druckspeicher (30) nach einem der Ansprüche 18-20 angeordnet,
- das Sperrmittel (22) ist nur für den Phasensteller (S) oder nur für den Phasensteller (S) und die Vakuumpumpe (P) vorgesehen,
- in einer Druckfluidzuführung für den Phasensteller (S) ist ein Filter (21) angeordnet, vorzugsweise in oder an dem Anbaugehäuse (G).

24. Vorrichtung nach dem vorhergehenden Anspruch, **dadurch gekennzeichnet, dass** das Anbaugehäuse (G) für das Druckfluid oder das Schmieröl einen Fluidanschluss (17) aufweist für einen Anschluss an eine Fluidzuführung in oder an einem Maschinengehäuse (4) der Brennkraftmaschine.

25. Vorrichtung nach einem der vorhergehenden Ansprüche, **dadurch gekennzeichnet, dass** der Phasensteller (S) einen ersten Rotor (7) und einen zweiten Rotor (8) aufweist und eine Drehwinkelposition, die die Rotoren (7, 8) relativ zueinander aufweisen verstellbar ist und dass ein Steuermittel (V) für die Verstellung der Drehwinkelposition in einem Aufnahmeraum (16) des Anbaugehäuses (G) angeordnet ist.

26. Vorrichtung nach einem der vorhergehenden Ansprüche, **dadurch gekennzeichnet, dass** die Brennkraftmaschine eine erste und eine zweite Nockenwelle (1, 2) aufweist, der Phasensteller (S) für die Verstellung der Phasenlage der ersten Nockenwelle (1, 2) vorgesehen ist und die Vorrichtung einen weiteren Phasensteller (S) für die Verstellung der Phasenlage der zweiten Nockenwelle (1, 2) aufweist, wobei das Anbaugehäuse vorzugsweise auch für den weiteren Phasensteller (S) ein Gehäuse oder zumindest einen Gehäusedeckel bildet und wobei der weitere Phasensteller (S) vorzugsweise entsprechend wenigstens einem der vorhergehenden Ansprüche gebildet ist.

27. Vorrichtung nach einem der vorhergehenden Ansprüche, umfassend eine Detektionseinrichtung (D) für eine Ermittlung der Drehwinkelposition der zu verstellenden Nockenwelle (1, 2), wobei die Detektionseinrichtung (D) vorzugsweise in oder an dem Anbaugehäuse (6) angeordnet ist.

28. Vorrichtung nach dem vorhergehenden Anspruch, **dadurch gekennzeichnet, dass** die Detektionseinrichtung (D) einen Drehwinkelgeber (35) und einen Sensor (36) zur Detektion der Drehwinkelposition des Drehwinkelgebers (35) umfasst, wobei der Drehwinkelgeber vorzugsweise an einem Rotor (7, 8) des Phasenstellers (S) angeordnet und der Sensor (36) vorzugsweise in oder an dem Anbaugehäuse (G) angeordnet ist.

29. Brennkraftmaschine umfassend:
a) eine Kurbelwelle,
b) eine Nockenwelle (1, 2)
c) und eine an der Brennkraftmaschine montierte Vorrichtung nach einem der vorhergehenden Ansprüche für die Verstellung der Phasenlage der Nockenwelle (1, 2) relativ zur Kurbelwelle und zur Versorgung eines Aggregats mit Unterdruck.

30. Brennkraftmaschine nach dem vorhergehenden Anspruch, **dadurch gekennzeichnet, dass** das Anbaugehäuse (G) an einem Maschinengehäuse (4) der Brennkraftmaschine, vorzugsweise einem Zylinderkopf, montiert ist.

## Claims

1. A device for adjusting the phase position of a cam shaft (1, 2) of an internal combustion engine and for supplying an assembly with a partial vacuum, said device comprising:
a) a phase setter (S) for adjusting the phase position of the cam shaft (1, 2) relative to a crankshaft of the internal combustion engine;
b) a vacuum pump (P) for the assembly;
c) and an attachment housing (G) for the vacuum pump, wherein the attachment housing can be mounted on the internal combustion engine,
d) wherein the attachment housing (G) also forms a housing or at least a housing cover for the phase setter (S),
**characterised in that**
e) the phase setter (S) can be supplied with the pressure fluid by the attachment housing (G).

2. The device according to claim 1, **characterised in that** the phase setter (S) comprises a first rotor (7) for a drive which is dependent on the rotational speed of the crankshaft, and a second rotor (8) for an output onto the cam shaft (1, 2), and the attachment housing (G) rotatably mounts at least one of the rotors (7, 8) directly or via at least one intermediate member (9).

3. The device according to the preceding claim, **characterised in that** the attachment housing (G) rotatably mounts one of the rotors (7, 8) directly and rotatably mounts the other via at least one intermediate member (9).

4. The device according to any one of the preceding claims, **characterised in that** the phase setter (S) comprises a rotor (7, 8), and the attachment housing (G) mounts said rotor (7, 8), directly or via at least one intermediate member, in a position and orientation in which, when the attachment housing (G) is mounted, said rotor (7, 8) can be mounted on the cam shaft (1, 2) or on another cam shaft (2, 1) of the internal combustion engine, secured against rotating.

5. The device according to any one of the preceding three claims, **characterised in that** one of the rotors (7, 8) can be connected to the cam shaft (1, 2) by means of a pressing connection, preferably by means of oblique surfaces (9a) which can be slid onto each other.

6. The device according to any one of the preceding claims, **characterised in that** the internal combustion engine comprises another cam shaft (2, 1), one of the cam shafts (1, 2) is driven at an axial end, and the phase setter (S) can be mounted at the other axial end by one of the cam shafts (1, 2).

7. The device according to any one of the preceding claims, **characterised in that** the phase setter (S) and the vacuum pump (P) are coupled to each other, and the phase setter drives the vacuum pump or the vacuum pump drives the phase setter.

8. The device according to any one of the preceding claims, **characterised in that** the phase setter (S) comprises a drive side (9a) on which a torque can be introduced which drives the phase setter, and on an output side of the phase setter (S), a flow of force is branched into a first output end (5) and another, second output end (12), and **in that** the cam shaft (1, 2) to be adjusted is driven via the first output end, and the vacuum pump (P) is driven via the second output end.

9. The device according to any one of the preceding claims, **characterised in that** the phase setter (S) comprises a first rotor (7) for a drive which is dependent on the rotational speed of the crankshaft, and a second rotor (8) for an output onto the cam shaft (1, 2), and the attachment housing (G) rotatably mounts a gear member (5), via which the cam shaft (1, 2) can be driven by one of the rotors (7, 8) or via which one of the rotors (7, 8) can be driven, directly, or via at least one intermediate member (9).

10. The device according to any one of the preceding claims, **characterised in that** at least one of the following features is fulfilled:
- the internal combustion engine comprises at least two cam shafts (1, 2) which can be coupled to each other by means of gear members (5, 6) for a common drive, and the attachment housing (G) mounts at least one (5) of the gear members (5, 6) directly or via at least one intermediate member (9);
- the phase setter (S) and the vacuum pump (P) are coupled to each other by means of gear members (5, 6; 12, 13), and the phase setter drives the vacuum pump or the vacuum pump drives the phase setter via the gear members;
- the vacuum pump (P) is driven via gear members (12, 13) at a higher or lower rotational speed than the phase setter (S);
- the phase setter (S) and the vacuum pump (P) are arranged next to each other and with an at least partial axial overlap.

11. The device according to the preceding claim, **characterised in that** the phase setter comprises a first rotor (7) for a drive which is dependent on the rotational speed of the crankshaft, and a second rotor (8) for an output onto the cam shaft (1, 2), and the gear members (5, 6; 12, 13) couple one of the rotors (7, 8) to the vacuum pump (10, 11).

12. The device according to any one of the preceding two claims, **characterised in that** the gear members (5, 6; 12, 13) comprise at least one traction means which is based on a frictional or positive fit, or are only gear wheels (5, 6; 12, 13), preferably toothed wheels.

13. The device according to any one of the preceding four claims, **characterised in that** the gear member (5) or at least one of the gear members (5, 6; 12, 13) is arranged in or on the attachment housing (G).

14. The device according to any one of the preceding claims, **characterised in that** a rotor (7, 8) of the phase setter (S) is arranged such that it can rotate about a first rotational axis (R₁) and a conveying member (10, 11) of the vacuum pump (P) is arranged such that it can rotate about another, second rotational axis (R₁₀) which is preferably spaced in parallel from the first rotational axis.

15. The device according to any one of claims 1 to 13, **characterised in that** a rotor (7, 8) of the phase setter (S) and a conveying member (10, 11) of the vacuum pump (P) are arranged such that they can rotate about a common rotational axis (R₁).

16. The device according to the preceding claim, **characterised in that** the conveying member (10, 11) is connected or coupled by means of gear members, secured against rotating, to the rotor (7, 8).

17. The device according to any one of the preceding claims, **characterised in that** the phase setter (S) can be adjusted hydraulically, pneumatically or electrically.

18. The device according to any one of the preceding claims, **characterised in that** the phase setter (S) can be adjusted, preferably hydraulically, using a pressure fluid, and a pressure storage (30) is provided for the pressure fluid, in order to ensure a sufficiently high setting speed of the phase setter (S).

19. The according to the preceding claim, **characterised in that** at least one of the following features is fulfilled:
- the attachment housing (G) forms a wall (18) of the pressure storage (30);
- the pressure storage (30) comprises a pressure chamber (31) which is delineated by a wall structure (32) which can be moved against a restoring elasticity force and is supported by the attachment housing (G) or mounted such that it can move back and forth.

20. The device according to the preceding claim, **characterised in that** at least one of the following features is fulfilled:
- a spring (33) which generates the elasticity force is supported on the attachment housing (G);
- a piston forms the movable wall structure (32).

21. The device according to any one of the preceding claims, **characterised in that** at least one of the following features is fulfilled:
- the phase setter (S) can be adjusted, preferably hydraulically, using a pressure fluid and can be supplied with the pressure fluid by the attachment housing (G);
- the vacuum pump (P) can be supplied with lubricating oil by the attachment housing (G);
- the phase setter (S) can be adjusted, preferably hydraulically, using a pressure fluid and can be supplied with the pressure fluid via an engine housing (4) of the internal combustion engine or the cam shaft (1, 2) or another cam shaft (2, 1) of the internal combustion engine;
- the phase setter (S) can be adjusted, preferably hydraulically, using a pressure fluid, and at least one control conduit (25, 26) feeds through the attachment housing (G) in order to charge the phase setter (S) with the pressure fluid.

22. The device according to any one of the preceding claims, **characterised in that** the phase setter (S) can be adjusted, preferably hydraulically, using a pressure fluid, and a blocking means (22) is arranged in a feed of the pressure fluid, preferably in the attachment housing (G).

23. The device according to the preceding claim, **characterised in that** at least one of the following features is fulfilled:
- the blocking means (22) is arranged upstream of the pressure storage (30) according to any one of claims 18 to 19;
- the blocking means (22) is provided for the phase setter (S) only or for the phase setter (S) and the vacuum pump (P) only;
- a filter (21) is arranged in a pressure fluid supply for the phase setter (S), preferably in or on the attachment housing (G).

24. The device according to the preceding claim, **characterised in that** the attachment housing (G) for the pressure fluid or lubricating oil comprises a fluid port (17) for connecting to a fluid feed in or on an engine housing (4) of the internal combustion engine.

25. The device according to any one of the preceding claims, **characterised in that** the phase setter (S) comprises a first rotor (7) and a second rotor (8), and a rotational angular position which the rotors (7, 8) exhibit relative to each other can be adjusted, and **in that** a control means (V) for adjusting the rotational angular position is arranged in an accommodating space (16) of the attachment housing (G).

26. The device according to any one of the preceding claims, **characterised in that** the internal combustion engine comprises a first and a second cam shaft (1, 2), the phase setter (S) is provided for adjusting the phase position of the first cam shaft (1, 2), and the device comprises another phase setter (S) for adjusting the phase position of the second cam shaft (1, 2), wherein the attachment housing preferably also forms a housing or at least a housing cover for the other phase setter (S) and wherein the other phase setter (S) is preferably formed in accordance with at least one of the preceding claims.

27. The device according to any one of the preceding claims, comprising a detection means (D) for ascertaining the rotational angular position of the cam shaft (1, 2) to be adjusted, wherein the detection means (D) is preferably arranged in or on the attachment housing (G).

28. The device according to the preceding claim, **characterised in that** the detection means (D) comprises a rotational angle transmitter (35) and a sensor (36) for detecting the rotational angular position of the rotational angle transmitter (35), wherein the rotational angle transmitter is preferably arranged on a rotor (7, 8) of the phase setter (S), and the sensor (36) is preferably arranged in or on the attachment housing (G).

29. An internal combustion engine, comprising:
a) a crankshaft;
b) a cam shaft (1, 2);
c) and a device according to any one of the preceding claims, mounted on the internal combustion engine, for adjusting the phase position of the cam shaft (1, 2) relative to the crankshaft and for supplying an assembly with a partial vacuum.

30. The internal combustion engine according to the preceding claim, **characterised in that** the attachment housing (G) is mounted on an engine housing (4) of the internal combustion engine, preferably a cylinder head.

## Revendications

1. Dispositif pour régler la position de phase d'un arbre à cames (1, 2) d'un moteur à combustion interne et alimenter un ensemble avec une pression négative, le dispositif comportant :
a) un déphaseur (S) réglable avec un fluide de pression pour régler la position de phase de l'arbre à cames (1, 2) par rapport à un vilebrequin du moteur à combustion interne,
b) une pompe à vide (P) pour l'ensemble,
c) et un carter de fixation (G) pour la pompe à vide, pouvant être monté sur le moteur à combustion interne,
d) le carter de fixation (G) formant également un carter ou au moins un couvercle de carter pour le déphaseur (S),
**caractérisé en ce que**
e) le déphaseur (S) peut être alimenté en fluide de pression à travers le carter de fixation (G).

2. Dispositif selon la revendication 1, **caractérisé en ce que** le déphaseur (P) comporte un premier rotor (7) pour un entraînement qui dépend de la vitesse de rotation du vilebrequin et un second rotor (8) pour une sortie sur l'arbre à cames (1, 2), et le carter de fixation (G) monte au moins l'un des rotors (7, 8) de manière à pouvoir tourner, directement ou par l'intermédiaire d'au moins un élément intermédiaire (9).

3. Dispositif selon la revendication précédente, **caractérisé en ce que** le carter de fixation (G) monte l'un des rotors (7, 8) de manière à pouvoir tourner, directement et monte l'autre des rotors par l'intermédiaire d'au moins un élément intermédiaire (9).

4. Dispositif selon l'une quelconque des revendications précédentes, **caractérisé en ce que** le déphaseur (S) comporte un rotor (7, 8) et le carter de fixation (G) monte ce rotor (7, 8) de manière à pouvoir tourner, directement ou par l'intermédiaire d'au moins un élément intermédiaire, dans une position et une orientation dans lesquelles ce rotor (7, 8) peut, lors du montage du carter de fixation (G), être monté bloqué en rotation sur l'arbre à cames (1, 2) ou un autre arbre à cames (2, 1) du moteur à combustion interne.

5. Dispositif selon l'une quelconque des trois revendications précédentes, **caractérisé en ce que** l'un des rotors (7, 8) peut être relié à l'arbre à cames (1, 2) au moyen d'un assemblage par pression, de préférence au moyen de surfaces inclinées (9a) pouvant glisser l'une sur l'autre.

6. Dispositif selon l'une quelconque des revendications précédentes, **caractérisé en ce que** le moteur à combustion interne comporte un autre arbre à cames (2, 1), l'un des arbres à cames (1, 2) est entraîné sur une extrémité axiale et le déphaseur (S) peut être monté sur l'autre extrémité axiale de l'un des arbres à cames (1, 2) .

7. Dispositif selon l'une quelconque des revendications précédentes, **caractérisé en ce que** le déphaseur (S) et la pompe à vide (P) sont couplés l'un à l'autre et le déphaseur entraîne la pompe à vide ou la pompe à vide entraîne le déphaseur.

8. Dispositif selon l'une quelconque des revendications précédentes, **caractérisé en ce que** le déphaseur (S) comporte un côté d'entraînement (9a) sur lequel peut être introduit un couple entraînant le déphaseur, et un côté de sortie du déphaseur (S) à partir duquel un flux de force est dévié vers une première extrémité de sortie (5) et une autre, seconde, extrémité de sortie (12), et **en ce que** l'arbre à cames à régler (1, 2) est entraîné par l'intermédiaire de la première extrémité de sortie et la pompe à vide (P) est entraînée par l'intermédiaire de la seconde extrémité de sortie.

9. Dispositif selon l'une quelconque des revendications précédentes, **caractérisé en ce que** le déphaseur (S) comporte un premier rotor (7) pour un entraînement qui dépend de la vitesse de rotation du vilebrequin et un second rotor (8) pour une sortie sur l'arbre à cames (1, 2), et le carter de fixation (G) monte un élément d'engrenage (5) de manière à pouvoir tourner, par l'intermédiaire duquel l'arbre à cames (1, 2) peut être entraîné par l'un des rotors (7, 8) ou par l'intermédiaire duquel l'un des rotors (7, 8) peut être entraîné, directement ou via au moins un élément intermédiaire (9).

10. Dispositif selon l'une quelconque des revendications précédentes, **caractérisé en ce qu'**au moins une des caractéristiques suivantes est satisfaite :
- le moteur à combustion interne comporte au moins deux arbres à cames (1, 2) qui peuvent être couplés l'un à l'autre au moyen d'éléments d'engrenage (5, 6) pour un entraînement conjoint, et **en ce que** le carter de fixation (G) monte au moins l'un (5) des éléments d'engrenage (5, 6) directement ou par l'intermédiaire d'au moins un élément intermédiaire (9),
- le déphaseur (S) et la pompe à vide (P) sont couplés l'un à l'autre au moyen d'éléments d'engrenage (5, 6 ; 12, 13) et le déphaseur entraîne la pompe à vide ou la pompe à vide entraîne le déphaseur par l'intermédiaire des éléments d'engrenage,
- la pompe à vide (P) est entraînée par des éléments d'engrenage (12, 13) avec une vitesse de rotation plus élevée ou moins élevée par rapport au déphaseur (S),
- le déphaseur (S) et la pompe à vide (P) sont agencés l'un à côté de l'autre avec au moins un chevauchement partiellement axial.

11. Dispositif selon la revendication précédente, **caractérisé en ce que** le déphaseur comporte un premier rotor (7) pour un entraînement qui dépend de la vitesse de rotation du vilebrequin et un second rotor (8) pour une sortie sur l'arbre à cames (1, 2), et les éléments d'engrenage (5, 6 ; 12, 13) couplent l'un des rotors (7, 8) à la pompe à vide (10, 11) .

12. Dispositif selon l'une quelconque des deux revendications précédentes, **caractérisé en ce que** les éléments d'engrenage (5, 6 ; 12, 13) incluent au moins des moyens de traction basés sur un ajustement par friction ou par complémentarité de formes ou sont exclusivement des roues d'engrenage (5, 6 ; 12, 13), de préférence des roues dentées.

13. Dispositif selon l'une quelconque des quatre revendications précédentes, **caractérisé en ce que** l'élément d'engrenage (5) ou au moins un des éléments d'engrenage (5, 6 ; 12, 13) est agencé dans ou sur le carter de fixation (G).

14. Dispositif selon l'une quelconque des revendications précédentes, **caractérisé en ce qu'**un rotor (7, 8) du déphaseur (S) est agencé de manière à pouvoir tourner autour d'un premier axe de rotation (R₁) et un élément de transport (10, 11) de la pompe à vide (P) est agencé de manière à pouvoir tourner autour d'un autre, second, axe de rotation (R₁₀) espacé du premier axe de rotation, de préférence parallèlement.

15. Dispositif selon l'une quelconque des revendications 1 à 13, **caractérisé en ce qu'**un rotor (7, 8) du déphaseur (S) et un élément de transport (10, 11) de la pompe à vide (P) sont agencés de manière à pouvoir tourner autour d'un axe de rotation commun (R₁).

16. Dispositif selon la revendication précédente, **caractérisé en ce que** l'élément de transport (10, 11) est relié au rotor (7, 8) en étant bloqué en rotation ou est couplé au moyen d'éléments d'engrenage.

17. Dispositif selon l'une quelconque des revendications précédentes, **caractérisé en ce que** le déphaseur (S) peut être réglé hydrauliquement, pneumatiquement ou électriquement.

18. Dispositif selon l'une quelconque des revendications précédentes, **caractérisé en ce que** le déphaseur (S) peut être réglé avec un fluide sous pression, de préférence hydrauliquement, et un accumulateur de pression (30) est prévu pour le fluide sous pression afin d'assurer une vitesse de réglage suffisamment grande du déphaseur (S).

19. Dispositif selon la revendication précédente, **caractérisé en ce qu'**au moins une des caractéristiques suivantes est satisfaite :
- le carter de fixation (G) forme une paroi (18) de l'accumulateur de pression (30),
- l'accumulateur de pression (30) comporte une chambre de pression (31) délimitée par une structure de paroi (32) qui peut être déplacée contre une force élastique de rappel et est supportée par le carter de fixation (G) ou est montée de manière à pouvoir se déplacer en va-et-vient.

20. Dispositif selon la revendication précédente, **caractérisé en ce qu'**au moins une des caractéristiques suivantes est satisfaite :
- un ressort (33) générant la force élastique est supporté par le carter de fixation (G),
- un piston forme la structure de paroi mobile (32) .

21. Dispositif selon l'une quelconque des revendications précédentes, **caractérisé en ce qu'**au moins une des caractéristiques suivantes est satisfaite :
- le déphaseur (S) peut être réglé avec un fluide sous pression, de préférence hydrauliquement, et peut être alimenté en fluide sous pression par l'intermédiaire du carter de fixation (G),
- la pompe à vide (P) peut être alimentée en huile lubrifiante par l'intermédiaire du carter de fixation (G),
- le déphaseur (S) peut être réglé avec un fluide sous pression, de préférence hydrauliquement, et peut être alimenté en fluide sous pression par l'intermédiaire d'un carter de moteur (4) du moteur à combustion interne ou de l'arbre à cames (1, 2) ou d'un autre arbre à cames (2, 1) du moteur à combustion interne,
- le déphaseur (S) peut être réglé avec un fluide sous pression, de préférence hydrauliquement, et au moins une conduite de commande (25, 26) passe à travers le carter de fixation (G) pour appliquer le fluide sous pression au déphaseur (S).

22. Dispositif selon l'une quelconque des revendications précédentes, **caractérisé en ce que** le déphaseur (S) peut être réglé avec un fluide sous pression, de préférence hydrauliquement, et des moyens de blocage (22) sont agencés dans une alimentation en fluide sous pression, de préférence dans le carter de fixation (G).

23. Dispositif selon la revendication précédente, **caractérisé en ce qu'**au moins une des caractéristiques suivantes est satisfaite :
- les moyens de blocage (22) sont agencés en amont de l'accumulateur de pression (30) selon l'une quelconque des revendications 18 à 19,
- les moyens de blocage (22) sont prévus uniquement pour le déphaseur (S) ou uniquement pour le déphaseur (S) et la pompe à vide (P),
- dans une alimentation en fluide sous pression pour le déphaseur (S) est agencé un filtre (21), de préférence dans ou sur le carter de fixation (G).

24. Dispositif selon la revendication précédente, **caractérisé en ce que** le carter de fixation (G) comporte un orifice de fluide (17) pour le fluide sous pression ou l'huile lubrifiante pour un raccordement à une alimentation en fluide dans ou sur un carter de moteur (4) du moteur à combustion interne.

25. Dispositif selon l'une quelconque des revendications précédentes, **caractérisé en ce que** le déphaseur (S) comporte un premier rotor (7) et un second rotor (8) et une position d'angle de rotation, que les rotors (7, 8) prennent l'un par rapport à l'autre, peut être réglée, et **en ce que** des moyens de commande (V) sont agencés pour régler la position d'angle de rotation dans un espace de réception (16) du carter de fixation (G).

26. Dispositif selon l'une quelconque des revendications précédentes, **caractérisé en ce que** le moteur à combustion interne comporte un premier et un second arbre à cames (1, 2), le déphaseur (S) est prévu pour régler la position de phase du premier arbre à cames (1, 2), et le dispositif comporte un autre déphaseur (S) pour régler la position de phase du second arbre à cames (1, 2), dans lequel le carter de fixation (G) forme de préférence également un carter ou au moins un couvercle de carter pour l'autre déphaseur (S), et dans lequel l'autre déphaseur (S) est formé de préférence selon au moins une des revendications précédentes.

27. Dispositif selon l'une quelconque des revendications précédentes, incluant un dispositif de détection (D) pour déterminer la position d'angle de rotation de l'arbre à cames (1, 2) à régler, dans lequel le dispositif de détection (D) est agencé de préférence dans ou sur le carter de fixation (G).

28. Dispositif selon la revendication précédente, **caractérisé en ce que** le dispositif de détection (D) inclut un codeur d'angle de rotation (35) et un capteur (36) pour détecter la position d'angle de rotation du codeur d'angle de rotation (35), dans lequel le codeur d'angle de rotation est agencé de préférence sur un rotor (7, 8) du déphaseur (S) et le capteur (36) est agencé de préférence dans ou sur le carter de fixation (G).

29. Moteur à combustion interne incluant :
a) un vilebrequin,
b) un arbre à cames (1, 2),
c) et un dispositif monté sur le moteur à combustion interne selon l'une quelconque des revendications précédentes pour régler la position de phase de l'arbre à cames (1, 2) par rapport au vilebrequin et pour alimenter un ensemble avec une pression négative.

30. Moteur à combustion interne selon la revendication précédente, **caractérisé en ce que** le carter de fixation (G) est monté sur un carter de moteur (4) du moteur à combustion interne, de préférence une culasse de cylindre.
